# EUROPEAN PATENT SPECIFICATION

(11) **EP 4 425 330 B1**
(45) Date of publication and mention of the grant of the patent: **23.09.2026**
(21) Application number: 22909733.2
(22) Date of filing: 06.12.2022
(51) Int. Cl.: G06F 9/451, H04M 1/02, H04M 1/72448, G06F 3/0488

(54) **CONTENT DISPLAY METHOD, ELECTRONIC DEVICE, AND COMPUTER READABLE STORAGE MEDIUM**
INHALTSANZEIGEVERFAHREN, ELEKTRONISCHE VORRICHTUNG UND COMPUTERLESBARES SPEICHERMEDIUM
PROCÉDÉ D'AFFICHAGE DE CONTENU, DISPOSITIF ÉLECTRONIQUE, ET SUPPORT DE STOCKAGE LISIBLE PAR ORDINATEUR

(30) Priority: 22.12.2021 CN 202111576598; 20.01.2022 CN 202210076929
(43) Date of publication of application: 04.09.2024
(73) Proprietor: Huawei Technologies Co., Ltd., Shenzhen, Guangdong 518129 (CN)
(72) Inventor: HUA, Tong, Shenzhen, Guangdong 518129 (CN); CHEN, Gong, Shenzhen, Guangdong 518129 (CN); JIANG, Hua, Shenzhen, Guangdong 518129 (CN); WU, Zhongbiao, Shenzhen, Guangdong 518129 (CN)
(74) Representative: MERH-IP Matias Erny Reichl Hoffmann Patentanwälte PartG mbB
(86) International application number: PCT/CN2022/136942
(87) International publication number: WO 2023/116418

(56) References cited:
- CN-A- 108 292 203
- CN-A- 109 889 630
- CN-A- 109 917 956
- CN-A- 111 124 561
- US-A1- 2015 338 888
- US-A1- 2017 345 397

## Description

This application claims priority to Chinese Patent Application No. 202111576598.5, filed with the China National Intellectual Property Administration on December 22, 2021 and entitled "CONTENT DISPLAY METHOD, ELECTRONIC DEVICE, AND COMPUTER-READABLE STORAGE MEDIUM", and claims priority to Chinese Patent Application No. 202210076929.7, filed with the China National Intellectual Property Administration on January 20, 2022 and entitled "CONTENT DISPLAY METHOD, ELECTRONIC DEVICE, AND COMPUTER-READABLE STORAGE MEDIUM".

### TECHNICAL FIELD

This application pertains to the field of terminal technologies, and in particular, to a content display method, an electronic device, and a computer-readable storage medium.

### BACKGROUND

With rapid development of electronic technologies, forms of electronic devices are increasingly diversified. Many electronic devices may be provided with a plurality of displays. For example, in an up-down foldable electronic device, a primary display may be disposed on a front side, and a secondary display may be further disposed on a back side. However, in an existing multi-display electronic device, a secondary display is mainly configured to display prompt information such as time and a notification, is simple in display function, and cannot meet a user requirement. Therefore, user experience is poor.
US 2015/338888 A1 generally discloses a foldable device that includes: a flexible display configured to display an execution screen of an application; and a controller configured to control the flexible display to display an execution screen of at least one first application on a first surface of the flexible display that is used as a display of the foldable device when the flexible display is folded, and control, in response to the flexible display being unfolded, the flexible display to display the execution screen of the at least one first application and an execution screen of at least one second application related to the at least one first application to be displayed on a second surface of the flexible display that is used as a display of the foldable device when the flexible display is unfolded.

### SUMMARY

Embodiments of this application provide a content display method, an electronic device, and a computer-readable storage medium, to resolve a problem that an existing secondary display cannot meet a user requirement and causes poor user experience because of a single display function. In particular, this application provides a content display method and a corresponding electronic device, having the features of respective independent claims. The dependent claims relate to preferred embodiments.

According to a first aspect, an embodiment of this application provides a content display method, applied to an electronic device, where the electronic device includes at least a first display and a second display. The method may include:
the electronic device displays, on the first display, a first interface of a first application;
the electronic device detects a trigger operation, where the trigger operation includes a first preset operation; and
the electronic device displays, on the second display in response to the trigger operation, a card corresponding to the first application, where content displayed on the card is determined by content displayed on the first interface.

In the foregoing content display method, when the electronic device displays, on the first display, the first interface of the first application, if the electronic device detects a trigger operation, the electronic device may display, on the second display of the electronic device, the card corresponding to the first application. Content displayed on the card may be determined based on the content displayed on the first interface. The trigger operation may include one or more preset operations, so that content displayed on the first display is switched, based on the one or more preset operations, to the second display for displaying by using the card. This enriches display functions of a multi-display electronic device and improves user experience.

For example, the first display is a primary display of the electronic device, and the second display is a secondary display of the electronic device.

For example, the first display and the second display are disposed on different sides of the electronic device.

In a possible implementation, the first preset operation is a preset folding operation or a preset flipping operation.

It should be understood that the preset folding operation may be an operation of folding the electronic device inwards to enable an included angle between a first display area and a second display area of the first display to be within a preset angle interval. The preset flipping operation may be an operation of flipping the electronic device to enable the first display to be in an invisible state and the second display to be in a visible state, or the preset flipping operation may be an operation of flipping the electronic device to enable the second display to face a user.

That the electronic device displays, on the second display, a card corresponding to the first application includes:
the electronic device determines whether the first application is a target application; and
when the first application is the target application, the electronic device displays, on the second display, the card corresponding to the first application; or
when the first application is not the target application, the electronic device displays, on the second display, a desktop corresponding to the second display.

In the content display method provided in this implementation, the electronic device may switch displayed content only for the target application. For example, only for a target application customized by the user, the electronic device may switch displayed content based on a trigger operation, thereby improving user experience. When detecting the trigger operation, if the electronic device determines that the first application is not the target application, the electronic device may display, on the second display, the desktop corresponding to the second display, to help the user continue using the electronic device through the second display, thereby improving user experience.

In a possible implementation, the trigger operation further includes a second preset operation, and that the electronic device displays, on the second display in response to the trigger operation, a card corresponding to the first application may include:
the electronic device displays, on the second display in response to the first preset operation and the second preset operation, the card corresponding to the first application.

It should be understood that the second preset operation may be a preset rotation operation, or may be a preset operation (for example, a touch operation) performed on the second display. The preset rotation operation may be an operation of rotating the electronic device to enable the second display to face the user.

In the content display method provided in this implementation, the electronic device may determine, based on the first preset operation and the second preset operation, whether the user intends to switch the first interface displayed on the first display to the second display for displaying, to accurately identify a switching intent of the user based on the first preset operation and the second preset operation, thereby reducing incorrect switching, and improving user experience.

In a possible implementation, the first display and the second display are disposed on different sides of the electronic device, and when a camera is used for the first interface, and a camera needs to be used for the card, the method may further include:
the electronic device disables a first camera that is being used for the first interface, and enables a second camera that is to be used for the card.

In the content display method provided in this implementation, for an application that needs to use a camera, for example, a video call application or a camera application, when the first interface is displayed on the first display, if a camera is being used for the first interface, and a camera needs to be used for the card, when switching the first interface displayed on the first display to the second display by using the card, or after switching the first interface displayed on the first display to the second display by using the card, the electronic device may further perform camera switching, that is, may disable the first camera that is being used for the first interface, and enable the second camera that is to be used for the card, so that the user can continue making a video call, photographing, or the like on the second display, thereby improving user experience.

It may be understood that the second camera that is to be used for the card may be determined based on the first camera that is being used for the first interface. For example, when the first interface is displayed on the first display, if a front-facing camera that is located on a side the same as that of the first display is used for the first interface, it may be determined that the second camera that is to be used for the card is a rear-facing camera that is located on a side the same as that of the second display. Therefore, when switching the first interface displayed on the first display to the second display by using the card, the electronic device may disable the front-facing camera, and enable the rear-facing camera that is located on the side the same as that of the second display, to help the user continue making a video call, photographing, or the like. For example, when the first interface is displayed on the first display, if the rear-facing camera that is located on a side different from that of the first display is used for the first interface, it may be determined that the second camera that is to be used for the card is the front-facing camera that is located on a side different from that of the second display. Therefore, when switching the first interface displayed on the first display to the second display by using the card, the electronic device may disable the rear-facing camera, and enable the front-facing camera that is located on the side the same as that of the first display.

In a possible implementation, after the electronic device displays, on the second display, a card corresponding to the first application, the method may further include:
the electronic device turns off the first display, or displays screen saver content on the first display.

In the content display method provided in this implementation, after switching the first interface displayed on the first display to the second display for displaying, the electronic device may turn off the first display or display screen saver content on the first display, to reduce power consumption of the electronic device.

In a possible implementation, the method may further include:
the electronic device disables the first application and the card in response to an exit operation detected on the second display.

In the content display method provided in this implementation, the electronic device may disable, based on the preset exit operation detected on the second display, the first application on the first display and the card displayed on the second display, to quickly disable the first application on the first display and the card on the second display through a same operation. This improves exit efficiency and user experience.

According to a second aspect, an embodiment of this application provides a content display method, applied to an electronic device, where the electronic device includes at least a first display and a second display. The method may include:
the electronic device displays, on the first display, a card corresponding to a first application;
the electronic device detects a trigger operation, where the trigger operation includes a first preset operation; and
the electronic device displays, on the second display in response to the trigger operation, a first interface of the first application, where content displayed on the first interface is determined by content displayed on the card.

In the foregoing content display method, when the electronic device displays, on the first display, the card corresponding to the first application, if the electronic device detects a trigger operation, the electronic device may display, on the second display of the electronic device, the first interface of the first application. The content displayed on the first interface may be determined based on the content displayed on the card. The trigger operation may include one or more preset operations, so that the content displayed on the card is switched, based on the one or more preset operations, from the first display to the second display for displaying. This enriches display functions of a multi-display electronic device and improves user experience.

For example, the first display is a secondary display of the electronic device, and the second display is a primary display of the electronic device.

For example, the first display and the second display are disposed on different sides of the electronic device.

In a possible implementation, the first preset operation may be a preset unfolding operation or a preset flipping operation. The preset unfolding operation may be an operation of unfolding the electronic device to enable an included angle between a first display area and a second display area of the first display to be within a preset angle interval. The preset flipping operation may be an operation of flipping the electronic device to enable the first display to be in an invisible state and the second display to be in a visible state, or the preset flipping operation may be an operation of flipping the electronic device to enable the second display to face a user.

In a possible implementation, when the first application is a call application, and the content displayed on the card corresponding to the first application is content corresponding to an incoming call interface of the call application, that the electronic device displays, on the second display in response to the trigger operation, a first interface of the first application may include:
the electronic device answers an incoming call in response to the trigger operation, and displays a call interface of the call application on the second display.

In the content display method provided in this implementation, when an incoming call card is displayed on the first display, if the user intends to answer the incoming call, the user may perform a trigger operation (for example, the preset unfolding operation). After detecting the preset unfolding operation, the electronic device may enable the call application, and automatically answer the incoming call. In this case, the electronic device may display, on the second display, the call interface corresponding to the call application, so that the user directly reaches a final interface without performing excessive operations, thereby improving user experience.

In a possible implementation, the trigger operation further includes a second preset operation, and that the electronic device displays, on the second display in response to the trigger operation, a first interface of the first application may include:
the electronic device displays, on the second display in response to the first preset operation and the second preset operation, the first interface of the first application.

The second preset operation may be a preset rotation operation, or may be a preset operation (for example, a touch operation) performed on the second display.

In the content display method provided in this implementation, the electronic device may determine, based on the first preset operation and the second preset operation, whether the user intends to switch the first interface displayed on the first display to the second display for displaying, to accurately identify a switching intent of the user based on the first preset operation and the second preset operation, thereby reducing incorrect switching, and improving user experience.

In a possible implementation, the first display and the second display are disposed on different sides of the electronic device, and when a camera is used for the card, and a camera needs to be used for the first interface, the method may further include:
the electronic device disables a first camera that is being used for the card, and enables a second camera that is to be used for the first interface.

In a possible implementation, after the electronic device displays, on the second display, a first interface of the first application, the method may further include:
the electronic device turns off the first display, or displays screen saver content on the first display.

According to a third aspect, an embodiment of this application provides a content display apparatus, applied to an electronic device, where the electronic device includes at least a first display and a second display. The apparatus may include:
an interface display module, configured to: display, on the first display, a first interface of a first application;
a trigger operation detection module, configured to detect a trigger operation, where the trigger operation includes a first preset operation; and
a card display module, configured to: display, on the second display in response to the trigger operation, a card corresponding to the first application, where content displayed on the card is determined by content displayed on the first interface.

For example, the first display is a primary display of the electronic device, and the second display is a secondary display of the electronic device.

For example, the first display and the second display are disposed on different sides of the electronic device.

In a possible implementation, the first preset operation may be a preset folding operation or a preset flipping operation.

It should be understood that the preset folding operation may be an operation of folding the electronic device inwards to enable an included angle between a first display area and a second display area of the first display to be within a preset angle interval. The preset flipping operation may be an operation of flipping the electronic device to enable the first display to be in an invisible state and the second display to be in a visible state, or the preset flipping operation may be an operation of flipping the electronic device to enable the second display to face a user.

The card display module includes:
a target application determining unit, configured to determine whether the first application is a target application;
a card display unit, configured to: when the first application is the target application, display, on the second display, the card corresponding to the first application; and
a desktop display unit, configured to: when the first application is not the target application, display, on the second display, a desktop corresponding to the second display.

In a possible implementation, the trigger operation further includes a second preset operation, and the card display module may be further configured to: display, on the second display in response to the first preset operation and the second preset operation, the card corresponding to the first application.

It should be understood that the second preset operation may be a preset rotation operation, or may be a preset operation (for example, a touch operation) performed on the second display. The preset rotation operation may be an operation of rotating the electronic device to enable the second display to face the user.

In a possible implementation, the first display and the second display are disposed on different sides of the electronic device, and when a camera is used for the first interface, the apparatus may further include:
a camera switching module, configured to: disable a first camera corresponding to the first display, and enable a second camera corresponding to the second display.

In a possible implementation, the apparatus may further include:
a screen-off module, configured to: turn off the first display, or display screen saver content on the first display.

In a possible implementation, the apparatus may further include:
an exit module, configured to disable the first application and the card in response to an exit operation detected on the second display.

According to a fourth aspect, an embodiment of this application provides a content display apparatus, applied to an electronic device, where the electronic device includes at least a first display and a second display. The apparatus may include:
a card display module, configured to: display, on the first display, a card corresponding to a first application;
a trigger operation detection module, configured to detect a trigger operation, where the trigger operation includes a first preset operation; and
an interface display module, configured to: display, on the second display in response to the trigger operation, a first interface of the first application, where content displayed on the first interface is determined by content displayed on the card.

For example, the first display is a secondary display of the electronic device, and the second display is a primary display of the electronic device.

For example, the first display and the second display are disposed on different sides of the electronic device.

In a possible implementation, the first preset operation is a preset unfolding operation or a preset flipping operation. The preset unfolding operation may be an operation of unfolding the electronic device to enable an included angle between a first display area and a second display area of the first display to be within a preset angle interval. The preset flipping operation may be an operation of flipping the electronic device to enable the first display to be in an invisible state and the second display to be in a visible state, or the preset flipping operation may be an operation of flipping the electronic device to enable the second display to face a user.

In a possible implementation, when the first application is a call application, and the content displayed on the card corresponding to the first application is content corresponding to an incoming call interface of the call application, the interface display module may be further configured to: answer an incoming call in response to the trigger operation, and display a call interface of the call application on the second display.

In a possible implementation, the trigger operation further includes a second preset operation, and the interface display module may be further configured to: display, on the second display in response to the first preset operation and the second preset operation, the first interface of the first application.

The second preset operation may be a preset rotation operation, or may be a preset operation (for example, a touch operation) performed on the second display.

In a possible implementation, the first display and the second display are disposed on different sides of the electronic device, and when a camera is used for the first interface, the apparatus may further include:
a camera switching module, configured to: disable a first camera corresponding to the first display, and enable a second camera corresponding to the second display.

In a possible implementation, the apparatus may further include:
a screen-off module, configured to: turn off the first display, or display screen saver content on the first display.

According to a fifth aspect, an embodiment of this application provides an electronic device, including a memory, a processor, and a computer program that is stored in the memory and that can be run on the processor. When the processor executes the computer program, the electronic device is enabled to implement the content display method in any one of the implementations of the first aspect or the second aspect.

According to a sixth aspect, an embodiment of this application provides a computer-readable storage medium. The computer-readable storage medium stores a computer program. When the computer program is executed by a computer, the computer is enabled to implement the content display method in any one of the implementations of the first aspect or the second aspect.

According to a seventh aspect, an embodiment of this application provides a computer program product. When the computer program product runs on an electronic device, the electronic device is enabled to perform the content display method in any one of the implementations of the first aspect or the second aspect.

It may be understood that for beneficial effects of the third aspect to the seventh aspect, refer to related descriptions in the first aspect or the second aspect. Details are not described herein again.

### BRIEF DESCRIPTION OF DRAWINGS

FIG. 1 is a schematic diagram of a structure of an electronic device;
FIG. 2 is a schematic diagram of a structure of an electronic device to which a content display method is applicable according to an embodiment of this application;
FIG. 3 is an example diagram of a folding operation according to an embodiment of this application;
FIG. 4 is a schematic diagram of a software architecture to which a content display method is applicable according to an embodiment of this application;
FIG. 5(a) and FIG. 5(b) are a schematic diagram 1 of an application scenario according to an embodiment of this application;
FIG. 6(a) and FIG. 6(b) are a schematic diagram 2 of an application scenario according to an embodiment of this application;
FIG. 7(a) and FIG. 7(b) are a schematic diagram 3 of an application scenario according to an embodiment of this application;
FIG. 8(a) to FIG. 8(c) are a schematic diagram 4 of an application scenario according to an embodiment of this application;
FIG. 9(a) to FIG. 9(c) are a schematic diagram 5 of an application scenario according to an embodiment of this application;
FIG. 10(a) to FIG. 10(d) are a schematic diagram 6 of an application scenario according to an embodiment of this application; and
FIG. 11(a) to FIG. 11(c) are a schematic diagram 7 of an application scenario according to an embodiment of this application.

### DESCRIPTION OF EMBODIMENTS

It should be understood that, when used in the specification of this application and the appended claims, the term "include" indicates presence of the described features, entireties, steps, operations, elements, and/or components, but does not exclude presence or addition of one or more other features, entireties, steps, operations, elements, components, and/or sets thereof.

It should also be understood that the term "and/or" as used in the specification of this application and the appended claims refers to any combination of one or more of associated items and all possible combinations, and includes such combinations.

As used in the specification of this application and the appended claims, the term "if" may be interpreted as "when" or "once" or "in response to determining" or "in response to detecting" depending on the context. Similarly, the phrase "if it is determined" or "if [described condition or event] is detected" may be interpreted, depending on the context, to mean "once determined" or "in response to determining" or "once [described condition or event] is detected" or "in response to detecting [described condition or event]".

In addition, in the descriptions of the specification of this application and the appended claims, the terms "first", "second", "third", and the like are merely used for distinguishing descriptions, but cannot be understood as indicating or implying relative importance.

Reference to "an embodiment", "some embodiments", or the like described in the specification of this application indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner.

In addition, "a plurality of" mentioned in embodiments of this application should be interpreted as two or more.

Steps in a content display method provided in embodiments of this application are merely examples. Not all steps are mandatory steps, or not all content in each piece of information or each message is mandatory. In a use process, the step or the content may be added or removed based on a requirement. In different embodiments, mutual reference may be made to a same step or steps or messages having a same function in embodiments of this application.

The service scenario described in embodiments of this application is intended to describe the technical solutions in embodiments of this application more clearly, and does not constitute a limitation on the technical solutions provided in embodiments of this application. A person of ordinary skill in the art may learn that, with evolution of network architectures and emergence of new service scenarios, the technical solutions provided in embodiments of this application are also applicable to a similar technical problem.

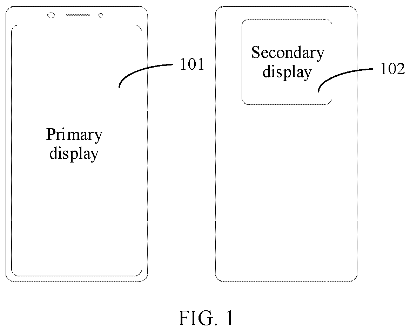

With rapid development of electronic technologies, forms of electronic devices are increasingly diversified. Many electronic devices may be provided with a plurality of displays. For example, as shown in FIG. 1, in an up-down foldable electronic device, a large primary display (which may also be referred to as an inner screen) 101 may be disposed on a front side, and a small secondary display (which may also be referred to as an outer screen) 102 may be further disposed on a back side. The secondary display 102 may be configured to display prompt information such as time and a notification, so that a case in which a crease of the electronic device is deepened because a user frequently unfolds the electronic device to view information can be avoided. However, in an existing multi-display electronic device, a secondary display is simple in display function, and cannot meet a user requirement. Therefore, user experience is poor.

To resolve the foregoing problems, embodiments of this application provide a content display method, an electronic device, and a computer-readable storage medium. The electronic device includes at least a first display and a second display. In the method, when the electronic device displays, on the first display, a first interface of a first application, if the electronic device detects a trigger operation, the electronic device may display, on the second display, a card corresponding to the first application, where content displayed on the card is determined by content displayed on the first interface. To be specific, in embodiments of this application, the electronic device may switch, based on the trigger operation, the content displayed on the first display to the second display for displaying by using the card. This greatly extends a display function of a multi-display electronic device, improves user experience, and has high usability and practicability.

The content display method provided in embodiments of this application may be applied to an electronic device like a mobile phone or a tablet computer that has a primary display and a secondary display. A specific type of the electronic device is not limited in embodiments of this application.

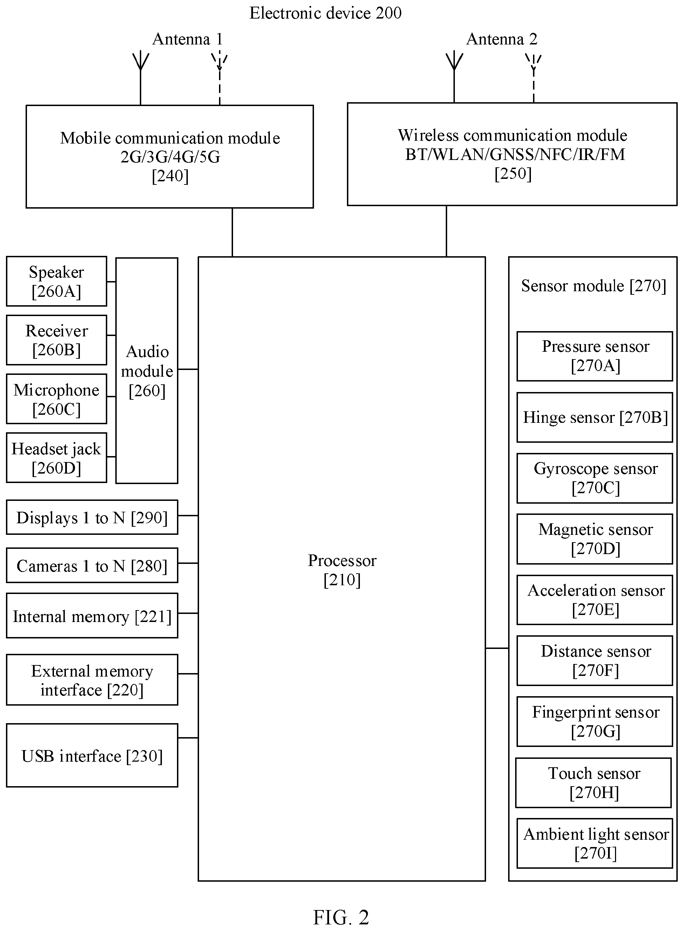

The following first describes the electronic device in embodiments of this application. FIG. 2 shows a schematic diagram of a structure of an electronic device 200.

The electronic device 200 may include a processor 210, an external memory interface 220, an internal memory 221, a universal serial bus (universal serial bus, USB) interface 230, an antenna 1, an antenna 2, a mobile communication module 240, a wireless communication module 250, an audio module 260, a speaker 260A, a receiver 260B, a microphone 260C, a headset jack 260D, a sensor module 270, a camera 280, a display 290, and the like. The sensor module 270 may include a pressure sensor 270A, a hinge sensor 270B, a gyroscope sensor 270C, a magnetic sensor 270D, an acceleration sensor 270E, a distance sensor 270F, a fingerprint sensor 270G, a touch sensor 270H, an ambient light sensor 270I, and the like.

It may be understood that the structure shown in this embodiment of this application does not constitute a specific limitation on the electronic device 200. In some other embodiments of this application, the electronic device 200 may include more or fewer components than those shown in the figure, or combine some components, or split some components, or have different component arrangements. The components shown in the figure may be implemented by hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU), and the like. Different processing units may be independent components, or may be integrated into one or more processors.

The controller may generate an operation control signal based on an instruction operation code and a time sequence signal, to complete control of instruction fetching and instruction execution.

A memory may be further disposed in the processor 210, and is configured to store instructions and data. In some embodiments, the memory in the processor 210 is a cache. The memory may store instructions or data just used or cyclically used by the processor 210. If the processor 210 needs to use the instructions or the data again, the processor may directly invoke the instructions or the data from the memory. This avoids repeated access and reduces waiting time of the processor 210, thereby improving system efficiency.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a universal serial bus (universal serial bus, USB) interface, and/or the like.

The I2C interface is a bidirectional synchronous serial bus, including a serial data line (serial data line, SDA) and a serial clock line (serial clock line, SCL). In some embodiments, the processor 210 may include a plurality of groups of I2C buses. The processor 210 may be separately coupled to the touch sensor 270H, the camera 280, and the like through different I2C bus interfaces. For example, the processor 210 may be coupled to the touch sensor 270H through the I2C interface, so that the processor 210 communicates with the touch sensor 270H through the I2C bus interface, to implement a touch function of the electronic device 200.

The I2S interface may be used for audio communication. In some embodiments, the processor 210 may include a plurality of groups of I2S buses. The processor 210 may be coupled to the audio module 260 through the I2S bus, to implement communication between the processor 210 and the audio module 260. In some embodiments, the audio module 260 may transmit an audio signal to the wireless communication module 250 through the I2S interface, to implement a function of answering a call through a Bluetooth headset.

The PCM interface may also be used for audio communication, and sample, quantize, and code an analog signal. In some embodiments, the audio module 260 may be coupled to the wireless communication module 250 through a PCM bus interface. In some embodiments, the audio module 260 may alternatively transmit an audio signal to the wireless communication module 250 through the PCM interface, to implement a function of answering a call through a Bluetooth headset. Both the I2S interface and the PCM interface may be used for audio communication.

The UART interface is a universal serial data bus, and is used for asynchronous communication. The bus may be a two-way communication bus. The bus converts to-be-transmitted data between serial communication and parallel communication. In some embodiments, the UART interface is generally configured to connect the processor 210 and the wireless communication module 250. For example, the processor 210 communicates with a Bluetooth module in the wireless communication module 250 through the UART interface, to implement a Bluetooth function. In some embodiments, the audio module 260 may transmit an audio signal to the wireless communication module 250 through the UART interface, to implement a function of playing music through a Bluetooth headset.

The MIPI interface may be configured to connect the processor 210 to a peripheral component like the display 290 or the camera 280. The MIPI interface includes a camera serial interface (camera serial interface, CSI), a display serial interface (display serial interface, DSI), and the like. In some embodiments, the processor 210 communicates with the camera 280 through the CSI interface, to implement a photographing function of the electronic device 200. The processor 210 communicates with the display 290 through the DSI interface, to implement a display function of the electronic device 200.

The GPIO interface may be configured by software. The GPIO interface may be configured as a control signal or a data signal. In some embodiments, the GPIO interface may be configured to connect the processor 210 to the camera 280, the display 290, the wireless communication module 250, the audio module 260, the sensor module 270, or the like. The GPIO interface may alternatively be configured as an I2C interface, an I2S interface, a UART interface, an MIPI interface, or the like.

The USB interface 230 is an interface that conforms to a USB standard specification, and may be specifically a mini USB interface, a micro USB interface, a USB Type-C interface, or the like. The USB interface 230 may be configured to perform data transmission between the electronic device 200 and a peripheral device, or may be configured to connect to a headset for playing an audio through the headset. The interface may be further configured to connect to another electronic device like an AR device.

It may be understood that an interface connection relationship between the modules shown in this embodiment of this application is merely an example for description, and does not constitute a limitation on the structure of the electronic device 200. In some other embodiments of this application, the electronic device 200 may alternatively use an interface connection manner different from that in the foregoing embodiment, or a combination of a plurality of interface connection manners.

A wireless communication function of the electronic device 200 may be implemented by using the antenna 1, the antenna 2, the mobile communication module 240, the wireless communication module 250, a modem processor, a baseband processor, and the like.

The antenna 1 and the antenna 2 are configured to transmit and receive an electromagnetic wave signal. Each antenna in the electronic device 200 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 240 may provide a wireless communication solution that includes 2G/3G/4G/5G or the like and that is applied to the electronic device 200. The mobile communication module 240 may include at least one filter, a switch, a power amplifier, a low noise amplifier (low noise amplifier, LNA), and the like. The mobile communication module 240 may receive an electromagnetic wave through the antenna 1, perform processing such as filtering or amplification on the received electromagnetic wave, and transmit a processed electromagnetic wave to the modem processor for demodulation. The mobile communication module 240 may further amplify a signal modulated by the modem processor, and convert the signal into an electromagnetic wave through the antenna 1 for radiation. In some embodiments, at least some functional modules in the mobile communication module 240 may be disposed in the processor 210. In some embodiments, at least some functional modules of the mobile communication module 240 may be disposed in a same device with at least some modules of the processor 210.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 260A, the receiver 260B, or the like), or displays an image or a video on the display 290. In some embodiments, the modem processor may be an independent component. In some other embodiments, the modem processor may be independent of the processor 210, and is disposed in a same device as the mobile communication module 240 or another functional module.

The wireless communication module 250 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 200. The wireless communication module 250 may be one or more devices integrating at least one communication processing module. The wireless communication module 250 receives an electromagnetic wave through the antenna 2, performs frequency modulation and filtering processing on an electromagnetic wave signal, and sends a processed signal to the processor 210. The wireless communication module 250 may further receive a to-be-sent signal from the processor 210, perform frequency modulation and amplification on the to-be-sent signal, and convert, through the antenna 2, the signal into an electromagnetic wave for radiation.

In some embodiments, in the electronic device 200, the antenna 1 and the mobile communication module 240 are coupled, and the antenna 2 and the wireless communication module 250 are coupled, so that the electronic device 200 can communicate with a network or another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 200 implements a display function by using the GPU, the display 290, the application processor, and the like. The GPU is a microprocessor for image processing, and is connected to the display 290 and the application processor. The GPU is configured to: perform mathematical and geometric computation, and render an image. The processor 210 may include one or more GPUs that execute program instructions to generate or change displayed information.

The display 290 is configured to display an image, a video, and the like. The display 290 includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), and the like. In some embodiments, the electronic device 200 may include one or N displays 290, where N is a positive integer greater than 1.

In some embodiments, the electronic device 200 may include a primary display and a secondary display. The primary display is a main display apparatus of the electronic device 200, and is a screen that is most frequently used. The secondary display is used as an auxiliary screen of the electronic device 200, and is less frequently used. For example, the primary display may be disposed on one side of the electronic device 200, and the secondary display may be disposed on the other side of the electronic device 200. For example, the primary display and a front-facing camera may be disposed on a same side, and the secondary display and a rear-facing camera may be disposed on a same side. For example, the secondary display may be disposed near the rear-facing camera. It may be understood that the primary display and the secondary display may be made of a same material, or may be made of different materials. This is not limited in embodiments of this application.

In some embodiments, a physical size of the primary display may be greater than a physical size of the secondary display.

In some embodiments, the primary display may be bent. For example, the primary display may be folded up and down from the middle to form any angle, and may be maintained at the angle. The primary display may be one screen, or may be a display formed by combining a plurality of screens. This is not limited herein. The primary display may alternatively be a flexible screen, has characteristics of strong flexibility and bendability, and can provide the user with a new interaction manner based on the bendable characteristic, to meet more requirements of the user for an electronic device with a foldable screen.

The electronic device 200 may implement a photographing function by using the ISP, the camera 280, the video codec, the GPU, the display 290, the application processor, and the like.

The ISP is configured to process data fed back by the camera 280. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 280.

The camera 280 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 200 may include one or N cameras 280, where N is a positive integer greater than 1.

In some embodiments, the electronic device 200 may include one or more front-facing cameras disposed on a front side, and may include one or more rear-facing cameras disposed on a rear side.

The digital signal processor is configured to process a digital signal, and may process another digital signal in addition to a digital image signal. For example, when the electronic device 200 selects a frequency, the digital signal processor is configured to perform Fourier transform on frequency energy and the like.

The video codec is configured to compress or decompress a digital video. The electronic device 200 may support one or more video codecs. In this way, the electronic device 200 may play or record videos in a plurality of encoding formats, for example, moving picture experts group (moving picture experts group, MPEG) 1, MPEG 2, MPEG 3, and MPEG 4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the electronic device 200 may be implemented by using the NPU, for example, image recognition, facial recognition, speech recognition, and text understanding.

The external memory interface 220 may be configured to connect to an external memory card, for example, a micro SD card, to expand a storage capability of the electronic device 200. The external storage card communicates with the processor 210 through the external memory interface 220, to implement a data storage function. For example, files such as music and videos are stored in the external storage card.

The internal memory 221 may be configured to store computer-executable program code, and the executable program code includes instructions. The internal memory 221 may include a program storage area and a data storage area. The program storage area may store an operating system, an application required by at least one function (for example, a voice playing function or an image playing function), and the like. The data storage area may store data (for example, audio data or a phone book) created in a process of using the electronic device 200. In addition, the internal memory 221 may include a high-speed random access memory, and may further include a nonvolatile memory, for example, at least one magnetic disk storage device, a flash storage device, or a universal flash storage (universal flash storage, UFS). The processor 210 runs the instructions stored in the internal memory 221 and/or the instructions stored in the memory disposed in the processor, to perform various function applications and data processing of the electronic device 200.

The electronic device 200 may implement audio functions by using the audio module 260, the speaker 260A, the receiver 260B, the microphone 260C, the headset jack 260D, the application processor, and the like. For example, a music playing function and a recording function are implemented.

The audio module 260 is configured to convert digital audio information into an analog audio signal for output, and is further configured to convert an analog audio input into a digital audio signal. The audio module 260 may be further configured to encode and decode audio signals. In some embodiments, the audio module 260 may be disposed in the processor 210, or some functional modules of the audio module 260 may be disposed in the processor 210.

The speaker 260A, also referred to as a "horn", is configured to convert an audio electrical signal into a sound signal. The electronic device 200 may listen to music or answer a hands-free call by using the speaker 260A.

The receiver 260B, also referred to as an "earpiece", is configured to convert an audio electrical signal into a sound signal. When a call is answered or voice information is listened to by using the electronic device 200, the receiver 260B may be put close to a human ear to listen to a voice.

The microphone 260C, also referred to as a "mike" or a "microphone", is configured to convert a sound signal into an electrical signal. When making a call or sending voice information, a user may place the mouth of the user near the microphone 260C to make a sound, to input a sound signal to the microphone 260C. At least one microphone 260C may be disposed in the electronic device 200. In some other embodiments, two microphones 260C may be disposed in the electronic device 200, to collect a sound signal and further implement a noise reduction function. In some other embodiments, three, four, or more microphones 260C may alternatively be disposed in the electronic device 200, to collect a sound signal, implement noise reduction, and identify a sound source, to implement a directional recording function, and the like.

The headset jack 260D is configured to connect to a wired headset. The headset jack 260D may be a USB interface 230, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 270A is configured to sense a pressure signal, and may convert the pressure signal into an electrical signal. In some embodiments, the pressure sensor 270A may be disposed on the display 290. There are many types of pressure sensors 270A, such as a resistive pressure sensor, an inductive pressure sensor, and a capacitive pressure sensor. The capacitive pressure sensor may include at least two parallel plates made of conductive materials. When a force is applied to the pressure sensor 270A, capacitance between electrodes changes. The electronic device 200 determines pressure strength based on a change of the capacitance. When a touch operation is performed on the display 290, the electronic device 200 detects intensity of the touch operation by using the pressure sensor 270A. The electronic device 200 may also calculate a touch position based on a detection signal of the pressure sensor 270A. In some embodiments, touch operations that are performed in a same touch position but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The hinge sensor 270B is configured to detect a folding angle of the primary display. In some embodiments, the hinge sensor 270B may be disposed in a bending area of the primary display.

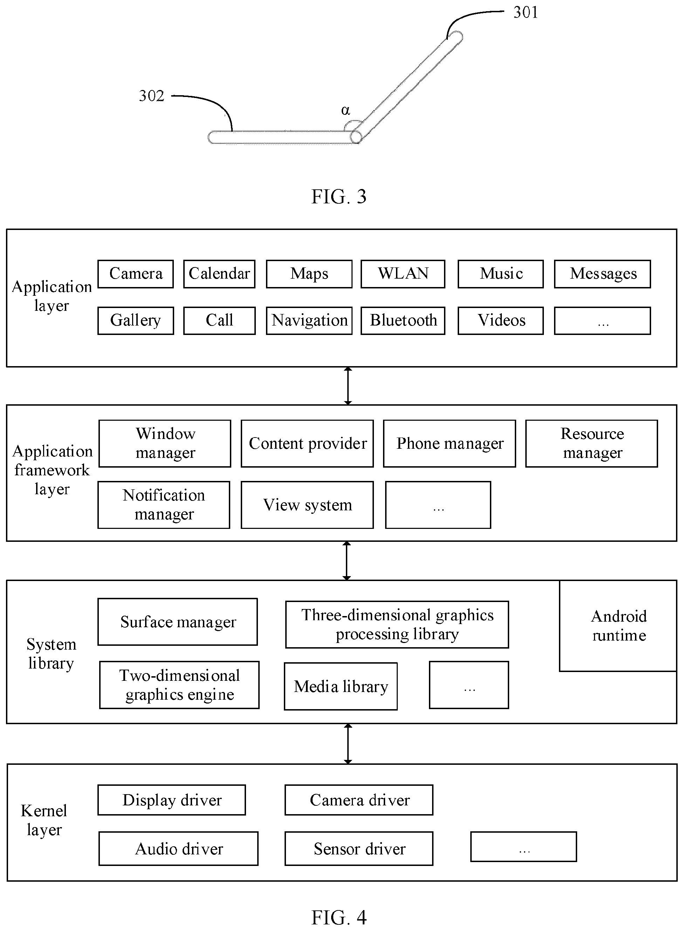

FIG. 3 is an example diagram of folding according to an embodiment of this application. As shown in FIG. 3, in this embodiment of this application, when the primary display is folded or unfolded, the hinge sensor 270B may obtain an included angle α between a first display area 301 and a second display area 302 of the primary display. The electronic device 200 determines, based on the included angle α, whether a preset folding operation is detected, to determine whether content displayed on the primary display needs to be switched to the secondary display for displaying, or whether content displayed on the secondary display needs to be switched to the primary display for displaying.

The gyroscope sensor 270C may be configured to determine a motion posture of the electronic device 200. In some embodiments, angular velocities of the electronic device 200 around three axes (namely, axes x, y, and z) may be determined by using the gyroscope sensor 270C. The gyroscope sensor 270C may be configured to implement image stabilization during photographing. For example, when a shutter is pressed, the gyroscope sensor 270C detects an angle at which the electronic device 200 jitters, calculates, based on the angle, a distance for which a lens module needs to compensate, and allows the lens to cancel the jitter of the electronic device 200 through reverse motion, to implement image stabilization. The gyroscope sensor 270C may be further used in a navigation scenario and a motion-sensing gaming scenario.

The magnetic sensor 270D includes a Hall effect sensor. The electronic device 200 may detect opening and closing of a flip leather case by using the magnetic sensor 270D. In some embodiments, when the electronic device 200 is a flip phone, the electronic device 200 may detect opening and closing of a flip cover based on the magnetic sensor 270D. Further, a feature such as automatic unlocking of the flip cover is set based on a detected opening or closing state of the leather case or a detected opening or closing state of the flip cover.

The acceleration sensor 270E may detect magnitudes of accelerations in various directions (generally on three axes) of the electronic device 200. Magnitude and a direction of gravity may be detected when the electronic device 200 is static. The acceleration sensor 270E may be further configured to identify a posture of the electronic device, and is used in an application like switching between a landscape mode and a portrait mode or a pedometer.

In this embodiment of this application, the electronic device 200 may determine a posture change of the primary display and/or a posture change of the secondary display with reference to the angular velocity obtained by the gyroscope sensor 270C, the acceleration obtained by the acceleration sensor 270E, and magnetic data obtained by the magnetic sensor 270D. In addition, the electronic device 200 may determine, based on the posture change of the primary display and/or the posture change of the secondary display, whether a preset flipping operation is detected, to determine whether the content displayed on the primary display needs to be switched to the secondary display for displaying, or whether the content displayed on the secondary display needs to be switched to the primary display for displaying.

For example, the electronic device 200 may further determine a posture change of the primary display and/or a posture change of the secondary display with reference to the angular velocity obtained by the gyroscope sensor 270C, the acceleration obtained by the acceleration sensor 270E, and magnetic data obtained by the magnetic sensor 270D. In addition, the electronic device 200 may determine, based on the posture change of the primary display and/or the posture change of the secondary display, whether a preset rotation operation is detected.

The distance sensor 270F is configured to measure a distance. The electronic device 200 may measure a distance in an infrared manner or a laser manner. In some embodiments, in a photographing scenario, the electronic device 200 may perform ranging by using the distance sensor 270F to implement fast focusing.

The fingerprint sensor 270G is configured to collect a fingerprint. The electronic device 200 may use a feature of the collected fingerprint to implement fingerprint-based unlocking, application lock access, fingerprint-based photographing, fingerprint-based call answering, and the like.

The touch sensor 270H is also referred to as a "touch control component". The touch sensor 270H may be disposed on the display 290. The touch sensor 270H and the display 290 form a touchscreen, and the touchscreen is also referred to as a "touch control screen". The touch sensor 270H is configured to detect a touch operation performed on or near the touch sensor. The touch sensor may transfer the detected touch operation to the application processor, to determine a type of a touch event. A visual output related to the touch operation may be provided by using the display 290. In some other embodiments, the touch sensor 270H may alternatively be disposed on a surface of the electronic device 200, and is located on a position different from that of the display 290.

The ambient light sensor 270I is configured to sense ambient light brightness. The electronic device 200 may adaptively adjust brightness of the display 290 based on the sensed ambient light brightness. The ambient optical sensor 270I may also be configured to automatically adjust white balance during photographing.

In this embodiment of this application, the electronic device 200 may further determine a status of the primary display and/or the secondary display based on the ambient light brightness sensed by the ambient sensor 270I.

A software system of the electronic device 200 may use a layered architecture, an event-driven architecture, a microkernel architecture, a micro service architecture, or a cloud architecture. In embodiments of this application, an Android system with a layered architecture is used as an example to describe a software structure of the electronic device 200.

FIG. 4 is a block diagram of a software structure of an electronic device 200 according to an embodiment of this application.

In a layered architecture, software is divided into several layers, and each layer has a clear role and a clear task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 4, the application packages may include applications such as Camera, Gallery, Calendar, Call, Maps, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 4, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and a browsing bookmark, an address book, and the like.

The view system includes visual controls such as a control for displaying a text and a control for displaying an image. The view system may be configured to construct an application. A display interface may include one or more views. For example, a display interface including a message notification icon may include a text display view and an image display view.

The phone manager is configured to provide a communication function of the electronic device 200, for example, call status management (including answering, hanging up, or the like).

The resource manager provides various resources such as a localized character string, an icon, a picture, a layout file, and a video file for an application.

The notification manager enables an application to display notification information in a status bar, and may be configured to convey a notification message. The notification manager may automatically disappear after a short pause without user interaction. For example, the notification manager is configured to notify download completion, give a message notification, and the like. The notification manager may alternatively be a notification that appears in a top status bar of the system in a form of a graph or a scroll bar text, for example, a notification of an application that is run on the background, or may be a notification that appears on a screen in a form of a dialog window. For example, text information is displayed in the status bar, an announcement is given, the electronic device vibrates, or an indicator light blinks.

The Android runtime includes a kernel library and a virtual machine. The Android runtime is responsible for scheduling and management of the Android system.

The kernel library includes two parts: a function that needs to be invoked in Java language and a kernel library of Android.

The application layer and the application framework layer run on the virtual machine. The virtual machine executes java files at the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of a working process of software and hardware of the electronic device 200 with reference to a content display scenario.

When the electronic device 200 displays content on the primary display, the hinge sensor 270B may obtain an angle corresponding to a folding operation, and send the angle to the processor 210. The processor 210 determines, based on the angle, that a corresponding hardware interrupt is sent to the kernel layer when the primary display is in a preset folded state. The kernel layer determines a card corresponding to the content displayed on the primary display. The application framework layer obtains the card from the kernel layer, and then enables a display driver of the secondary display by invoking the kernel layer, to display the card on the secondary display.

The following describes in detail the content display method provided in embodiments of this application with reference to the accompanying drawings and a specific application scenario. As an example rather than a limitation, the method may be applied to the foregoing electronic device. To be specific, an electronic device to which the method is applicable may include a primary display and a secondary display. A physical size of the secondary display may be less than a physical size of the primary display, and the primary display may be folded up and down from the middle to form any angle. For example, the primary display and the secondary display may be disposed on different sides of the electronic device (the following uses an example in which the primary display and the secondary display are disposed on different sides of the electronic device for description).

In embodiments of this application, when the first display of the electronic device displays the first interface of the first application, if the electronic device detects a trigger operation, the electronic device may display, on the second display of the electronic device, the card corresponding to the first application. Content displayed on the card may be determined based on content displayed on the first interface. The trigger operation may include one or more preset operations, so that content displayed on the first display is switched, based on the one or more preset operations, to the second display for displaying by using the card. This enriches display functions of a multi-display electronic device and improves user experience.

It should be noted that the card is an interface display form, and is usually independently customized by a third party (for example, an application developer). That is, the card is customized independently of an application corresponding to the card. The card may be embedded into another application, to be displayed as a part of an interface of the application. For example, a user (for example, a desktop application) may be allowed to embed the card into an interface (for example, embed the card to an activity component in an Android operating system) of the user for displaying. In other words, for any application, a card corresponding to the application and the application are independent of each other. To be specific, the card corresponding to the application is not an application interface of the application, but the card corresponding to the application may exchange data with the application. In this way, important information, an operation, or the like of the application can be updated or added to the card, thereby achieving direct service access and reducing experience levels. For example, a card set based on the Android operating system may be referred to as an ongoing service card (ongoing card), and a card set based on a Harmony operating system may be referred to as a service card, for example, form ability (FA).

It may be understood that the first application may be any application in the electronic device. The first display may be a primary display of the electronic device, and the second display may be a secondary display of the electronic device. Alternatively, the first display may be a secondary display of the electronic device, and the second display may be a primary display of the electronic device. In other words, the content display method provided in embodiments of this application may be applied to switching content displayed on the primary display of the electronic device to the secondary display of the electronic device for displaying, or may be applied to switching content displayed on the secondary display of the electronic device to the primary display for displaying. The following separately describes the two cases.
1. The first display is a primary display of the electronic device, and the second display is a secondary display of the electronic device

Initially, the electronic device may be in an unfolded state, and the primary display of the electronic device may face the user. In this case, the electronic device may display content on the primary display, that is, the electronic device may display the first interface of the first application on the primary display. When the user intends to switch the content displayed on the primary display to the secondary display for displaying, the user may perform a trigger operation (an example in which the trigger operation includes a first preset operation is used for description). When detecting the trigger operation (for example, the first preset operation), the electronic device may display, on the secondary display, the card corresponding to the first application, where content displayed on the card is determined by content displayed on the first interface, to switch the content displayed on the primary display to the secondary display for displaying.

It should be understood that one or more cards corresponding to the first application may be disposed in the electronic device. A size and/or a shape of the card may be specifically set by a person skilled in the art based on an actual scenario, or may be customized by the user. This is not limited in embodiments of this application. For example, a person skilled in the art may set the size of the card based on a size of the secondary display, so that the size of the card is less than or equal to the size of the secondary display, to facilitate display of the card on the secondary display. For example, the user may customize the shape of the card to any shape like a circle or a rectangle. The following uses an example in which the shape of the card is a circle for description.

In a possible implementation, the electronic device may display any interface of the first application by using a card corresponding to the first application. For example, the electronic device may display all content or some key content on the any interface by using the card. Content and key content that are specifically displayed on the card may be specifically set by a person skilled in the art based on an actual scenario. This is not limited in this embodiment of this application.

For example, for a play interface of a piece of music in a music application, the key content may be set to a song name, a control button (for example, a pause button and/or a switch button), and the like on the play interface.

For example, for a call interface in a call application, the key content may be set to a contact name, a control button (for example, an answer button and/or a hang-up button), and the like on the call interface.

For example, for a recording interface in a recording application, the key content may be set to recording duration, a control button (for example, a pause button), and the like on the recording interface.

For example, for a play interface in a radio application, the key content may be set to a broadcast frequency and the like on the play interface.

It may be understood that a layout of the content on the card may alternatively be specifically set by a person skilled in the art based on an actual scenario. This is not limited in this embodiment of this application. For example, a person skilled in the art may lay out the content based on the size and/or the shape of the card.

Therefore, when detecting the first preset operation, the electronic device may obtain the card corresponding to the first application, determine, based on the content displayed on the first interface, the content displayed on the card, and display the card (namely, a card displaying determined content, and all subsequent cards may be cards displaying the determined content) on the secondary display of the electronic device. In this way, the key content of the first interface is displayed on the secondary display by using a small card, to filter out redundant information and improve user experience.

When there are a plurality of cards corresponding to the first application, the electronic device may determine a card customized by the user as a card that needs to be currently displayed, or may determine a card that is most frequently used within specified duration as a card that needs to be currently displayed, or may determine a card that is set by the electronic device by default as a card that needs to be currently displayed, or the like. It may be understood that the specified duration may be specifically set based on an actual scenario, and the card that is set by the electronic device by default may be specifically set by a person skilled in the art based on an actual scenario.

The following uses an example in which there is one card corresponding to the first application for description.

It should be understood that, when detecting the first preset operation, if the first application running in the foreground does not exist in the electronic device, that is, the interface of the first application is not displayed on the primary display, the electronic device may not respond to the first preset operation, that is, the electronic device may not switch the content displayed on the primary display to the secondary display. Alternatively, the electronic device may display, on the secondary display based on the first preset operation, a main interface (namely, a desktop) or another recommended interface corresponding to the secondary display, or the like.

For example, when detecting the first preset operation, if a lock screen interface or a desktop corresponding to the primary display is displayed on the primary display of the electronic device, the electronic device may turn on the secondary display, and display, on the secondary display, the desktop corresponding to the secondary display. The desktop corresponding to the primary display, the desktop corresponding to the secondary display, and the another recommended interface may be specifically set by a person skilled in the art based on an actual scenario. This is not limited in this embodiment of this application.

For example, when the desktop corresponding to the secondary display is displayed on the secondary display, the user may invoke preset cards by performing an operation like sliding leftward on the desktop, sliding rightward on the desktop, sliding upward on the desktop, or sliding downward on the desktop, so that the user can select a specific card from the preset cards and display the specific card on the secondary display. The preset cards may be set by the electronic device by default, or may be customized by the user. For example, the user may add the preset card to a "Setting menu" -> "Desktop and wallpaper" -> "Display on the secondary display" -> "Edit" interface of the electronic device.

In a possible implementation, when detecting the first preset operation, the electronic device may determine whether the first application displayed on the primary display is a target application. When the first application is the target application, the electronic device may obtain the card corresponding to the first application, determine, based on the content displayed on the first interface, content displayed on the card, and may display the card on the secondary display. When the first application is not the target application, the electronic device may not respond to the first preset operation, that is, the electronic device does not switch the interface displayed on the primary display to the secondary display for displaying. Alternatively, the electronic device may display, on the secondary display based on the first preset operation, the desktop or another recommended interface corresponding to the secondary display, or the like.

The target application is specifically set by a person skilled in the art based on an actual scenario. This is not limited in this embodiment of this application. For example, a person skilled in the art may set, based on an actual scenario, the target application to an application that does not need to display information, like Call, Music, Recorder, or Radio, to facilitate use of the electronic device by the user when content viewing is not affected. For example, a person skilled in the art may set, based on an actual scenario, the target application to a commonly-used application like Navigation, WeChat^{®}, Alipay^{®}, and Camera, to facilitate use of these applications by the user in various cases.

For example, a person skilled in the art may set a corresponding card only for the target application, so that only the target application has a corresponding card in the electronic device. This can reduce a workload of a developer, and improve development efficiency. Therefore, the electronic device may determine whether the first application has a corresponding card, to determine whether the first application is the target application.

The following describes the first preset operation by using an example in which the electronic device can switch, based on the first preset operation only when the first application is the target application, the first interface displayed on the primary display to the secondary display for displaying. When the first application is not required to be the target application, refer to the description when the first application is the target application.

In this embodiment of this application, the first preset operation may be specifically set by a person skilled in the art based on an actual scenario. This is not limited in this embodiment of this application.

In an example, a uniform first preset operation may be set for different target applications. Therefore, for any first application, when detecting the first preset operation, if the first application is the target application, the electronic device may switch the first interface displayed on the primary display to the secondary display for displaying.

For example, the first preset operation may be uniformly set to a preset folding operation. As shown in FIG. 3, the preset folding operation may be an operation of folding (for example, folding the primary display inwards) the electronic device to enable an included angle α between a first display area 301 and a second display area 302 of the primary display to be within a preset angle interval.

The preset angle interval may be specifically set by a person skilled in the art based on an actual scenario. For example, the preset angle interval may be set to [0, 30°], or the preset angle interval may be set to [0, 60°], or the preset angle interval may be set to [30°, 150°].

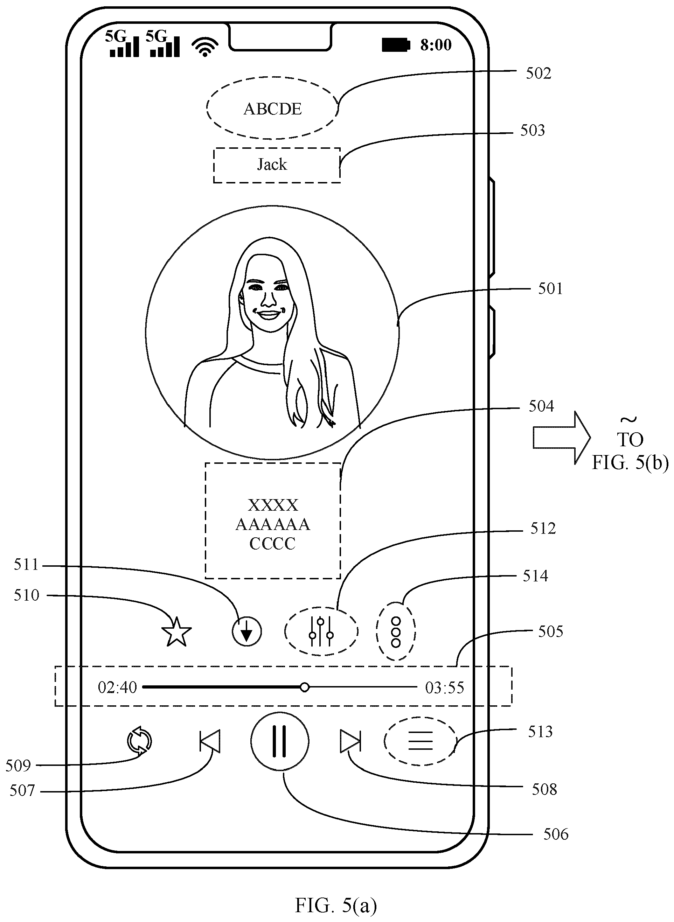

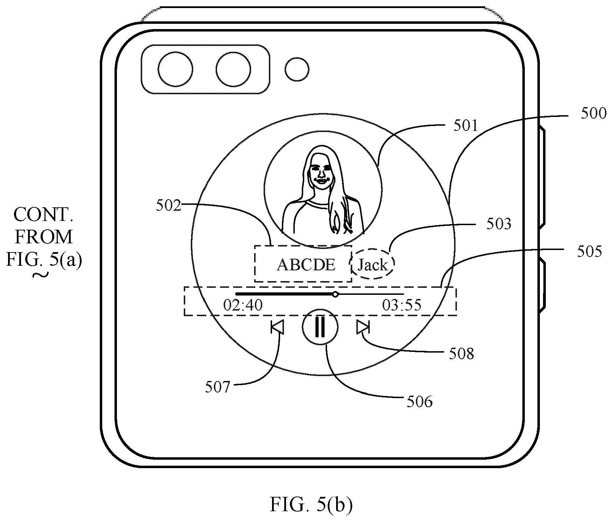

FIG. 5(a) and FIG. 5(b) are a schematic diagram 1 of an application scenario according to an embodiment of this application. The application scenario may be a music play scenario, and a first preset operation corresponding to a music application may be an operation of folding the electronic device to enable an included angle between the first display area and the second display area of the primary display to be within [0, 30°].

As shown in FIG. 5(a), initially, the electronic device may be in an unfolded state, and the user may enable the music application to play music. In this case, the electronic device may display a music play interface on the primary display. The music play interface may include a song picture 501, a song name 502, a singer 503, lyrics 504, a play progress 505, a pause button 506, a button 507 for switching to a previous song, a button 508 for switching to a next song, a play mode adjustment button 509, a favorites button 510, a download button 511, a sound effect adjustment button 512, a song list button 513, a button 514 for viewing more, and the like.

When the user intends to switch the music play interface displayed on the primary display to the secondary display for displaying, the user may fold the electronic device, so that an included angle between the first display area and the second display area of the primary display is within [0, 30°], for example, 0 degrees (0 degrees may not be reached in reality, and specifically, an angle actually reported by a hinge sensor of the electronic device is used). When detecting the folding operation, the electronic device may determine whether the music application is the target application.

It is assumed that the music application is the target application. As shown in FIG. 5(b), the electronic device may obtain a music card 500 corresponding to the music application, may determine, based on the music play interface shown in FIG. 5(a), content displayed on the music card 500, and may display the music card 500 on the secondary display. The music card 500 may include the song picture 501, the song name 502, the singer 503, the play progress 505, the pause button 506, the button 507 for switching to a previous song, the button 508 for switching to a next song, and the like that are on the music play interface.

For example, the first preset operation may be uniformly set to a preset flipping operation. The preset flipping operation may be an operation of exchanging an orientation of the primary display and an orientation of the secondary display to enable the secondary display to be in a visible state and the primary display to be in an invisible state, or the preset flipping operation may be an operation of exchanging an orientation of the primary display and an orientation of the secondary display to enable the secondary display to face the user. For example, initially, the primary display may face the user, and the secondary display may be away from the user. The flipping operation may enable the secondary display to face the user and enable the primary display to be away from the user.

The visible state is a state that can be viewed by the user, and the invisible state is a state that cannot be viewed by the user. For example, when the electronic device is placed at a position like a desktop, and the primary display is upward and the secondary display is downward, the primary display is in the visible state, and the secondary display is in the invisible state.

For example, the electronic device may detect, by using an ambient light sensor disposed on a side of the secondary display, whether the secondary display is in the visible state. Similarly, the electronic device may detect, by using an ambient light sensor disposed on a side of the primary display, whether the primary display is in the visible state.

It should be understood that the electronic device may obtain an image by using a camera located on a side of the secondary display, to determine, based on whether the image includes a face of the user, whether the secondary display faces the user. That is, when the image includes the face of the user, the electronic device may determine that the secondary display faces the user.

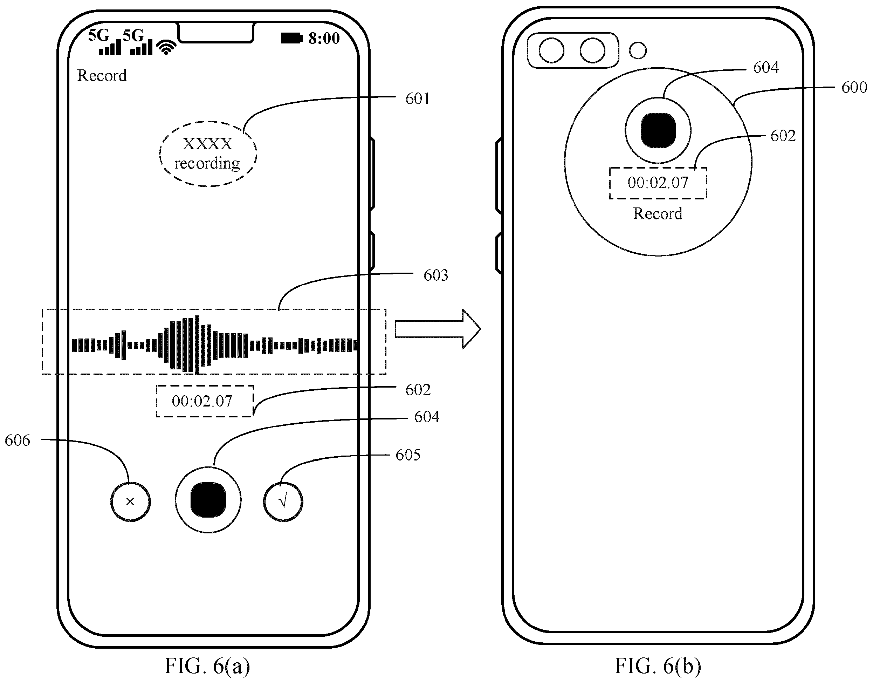

FIG. 6(a) and FIG. 6(b) are a schematic diagram 2 of an application scenario according to an embodiment of this application. The application scenario may be a recording scenario, and a first preset operation corresponding to a recording application may be a preset flipping operation.

As shown in FIG. 6(a), initially, the electronic device may be in an unfolded state, the primary display of the electronic device may face the user, and the secondary display may be away from the user. The user may enable the recording application to perform recording. In this case, the electronic device may display a recording interface on the primary display. The recording interface may include a recording name 601, recording duration 602, a sound signal waveform 603, a pause button 604, a save button 605, a delete button 606, and the like.

When the user intends to switch the recording interface displayed on the primary display to the secondary display for displaying, the user may flip the electronic device, so that the primary display is away from the user, and the secondary display faces the user. When detecting the preset flipping operation, the electronic device may determine whether the recording application is the target application.

It is assumed that the recording application is the target application. As shown in FIG. 6(b), the electronic device may obtain a recording card 600 corresponding to the recording application, may determine, based on the recording interface shown in FIG. 6(a), content displayed on the recording card 600, and may display the recording card 600 on the secondary display. The recording card 600 may include the recording duration 602, the pause button 604, and the like that are on the recording interface.

Different first preset operations are set for different target applications. For example, for target applications such as the recording application and a voice call application, the first preset operation may be set to a first folding operation (for example, an operation of folding the primary display to enable an included angle between the first display area and the second display area of the primary display to be within [0, 30°]). For target applications such as a video call application and a camera application that need to use a camera, the first preset operation may be set to a second folding operation (for example, an operation of folding the primary display to enable an included angle between the first display area and the second display area of the primary display to be within [30°, 150°]), to form, based on half-folding stability, a function similar to that of a support, so that the electronic device can be stably placed at a position like a desktop, thereby releasing both hands of the user and improving user experience. For target applications such as the music application and a radio application, the first preset operation may be set to the preset flip operation, or the like.

Therefore, for the target applications such as the recording application and the voice call application, when detecting the first folding operation, the electronic device may display, on the secondary display, the card corresponding to the first application. For the target applications such as the video call application and the camera application, when detecting the second folding operation, the electronic device may display, on the secondary display, the card corresponding to the first application. For the target applications such as the music application and the radio application, when detecting the preset flipping operation, the electronic device may display, on the secondary display, the card corresponding to the first application.

Optionally, for the target applications such as the video call application and the camera application that need to use a camera, if the first interface is displayed on the primary display, a camera is being used for the first interface, and a camera also needs to be used for the card, when switching the first interface displayed on the primary display to the secondary display by using the card, the electronic device may further perform camera switching. That is, the electronic device may disable a first camera that is being used for the first interface, and may enable a second camera that is to be used for the card, to help the user continue making a video call, photographing, or the like. Alternatively, the electronic device may perform camera switching after switching the first interface displayed on the primary display to the secondary display by using the card. That is, the electronic device disables a first camera that is being used for the first interface, and enables a second camera that is to be used for the card, to help the user continue making a video call, photographing, or the like. In other words, a sequence of interface switching and camera switching is not limited in this embodiment of this application. Interface switching and camera switching may be simultaneously performed, or interface switching may be performed first, and then, camera switching is performed.

It should be understood that the second camera that is to be used for the card may be determined based on the first camera that is being used for the first interface. For example, when the first interface is displayed on the primary display, if a front-facing camera that is located on a side the same as that of the primary display is used for the first interface, it may be determined that the second camera that is to be used for the card is a rear-facing camera that is located on a side the same as that of the secondary display. Therefore, when switching the first interface displayed on the primary display to the secondary display by using the card, the electronic device may disable the front-facing camera, and may enable the rear-facing camera that is located on the side the same as that of the secondary display. For example, when the first interface is displayed on the primary display, if the rear-facing camera that is located on a side different from that of the primary display is used for the first interface, it may be determined that the second camera that is to be used for the card is the front-facing camera that is located on a side different from that of the secondary display. Therefore, when switching the first interface displayed on the primary display to the secondary display by using the card, the electronic device may disable the rear-facing camera, and may enable the front-facing camera that is located on the side the same as that of the primary display.

Optionally, because a size of the secondary display is generally small, and it is inconvenient to display much content on the secondary display, for the video call application, when detecting the first preset operation, the electronic device may alternatively switch a video call to a voice call. That is, the electronic device may switch the video call interface displayed on the primary display to the secondary display by using the card (namely, a voice call card), and may disable the front-facing camera located on the side the same as that of the primary display.

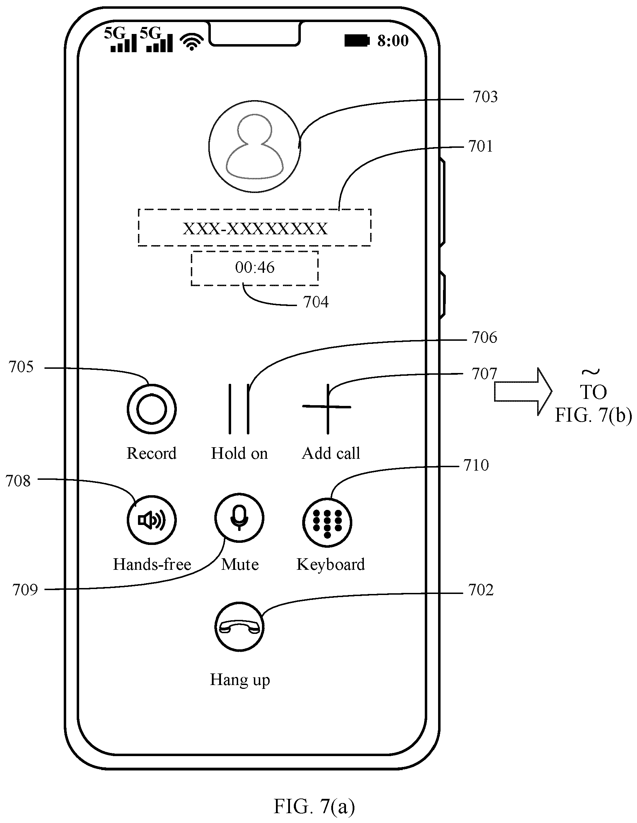

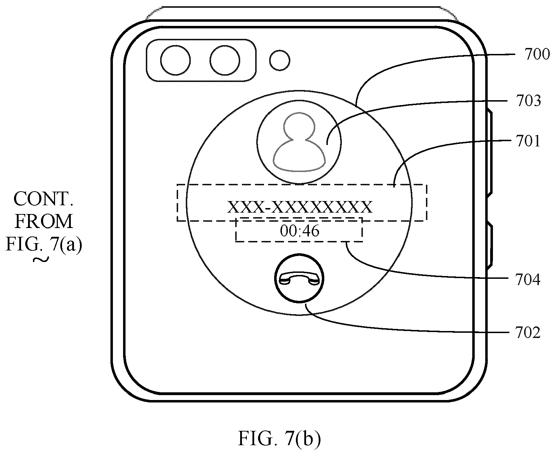

FIG. 7(a) and FIG. 7(b) are a schematic diagram 3 of an application scenario according to an embodiment of this application. The application scenario may be a voice call scenario, and a first preset operation corresponding to a voice call application may be an operation of folding the primary display to enable an included angle between the first display area and the second display area of the primary display to be within [0, 30°].

As shown in FIG. 7(a), initially, the electronic device may be in an unfolded state, and the user may enable the voice call application, to make a voice call with Tom. In this case, the electronic device may display a voice call interface on the primary display. The voice call interface may include an incoming user 701, a hang-up button 702, an image 703 corresponding to the incoming user, call duration 704, a recording button 705, a hold-on button 706, an add call button 707, a hands-free button 708, a mute button 709, a keyboard button 710, and the like.

When detecting a folding operation, and the folding operation causes the included angle between the first display area and the second display area of the primary display to be 0 degrees, the electronic device may determine that the folding operation is the first preset operation corresponding to the voice call application. In this case, the electronic device may determine whether the voice call application is the target application.

It is assumed that the voice call application is the target application. As shown in FIG. 7(b), the electronic device may obtain a voice call card 700 corresponding to the voice call application, may determine, based on the voice call interface shown in FIG. 7(a), content displayed on the voice call card 700, and may display the voice call card 700 on the secondary display. The voice call card 700 may include the incoming user 701, the hang-up button 702, the image 703 corresponding to the incoming user, the call duration 704, and the like that are on the voice call interface.

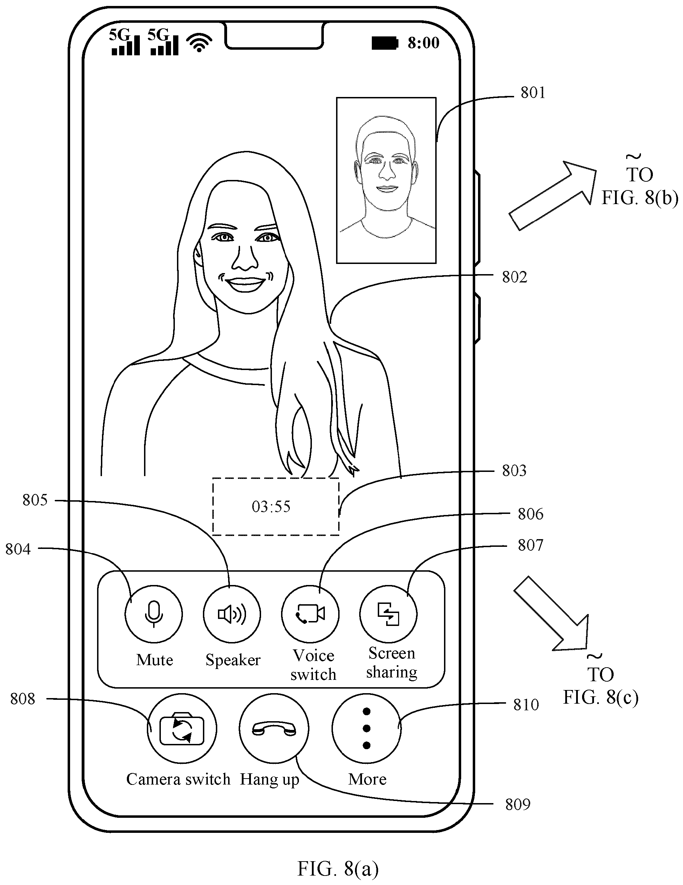

FIG. 8(a) to FIG. 8(c) are a schematic diagram 4 of an application scenario according to an embodiment of this application. The application scenario may be a video call scenario, and a first preset operation corresponding to a video call application may be an operation of folding the primary display to enable an included angle between the first display area and the second display area of the primary display to be within [30°, 150°].

As shown in FIG. 8(a), initially, the electronic device may be in an unfolded state, and the user may enable the video call application, to make a video call with Tom. In this case, the electronic device may display a video call interface on the primary display. The video call interface may include an image 801 of a call object, an image 802 of the user, call duration 803, a mute button 804, a speaker button 805, a voice switch button 806, a screen sharing button 807, a camera switch button 808, a hang-up button 809, a button 810 for viewing more operations, and the like.

When detecting a folding operation, and the folding operation causes the included angle between the first display area and the second display area of the primary display to be 90 degrees, the electronic device may determine that the folding operation is the first preset operation corresponding to the video call application. In this case, the electronic device may determine whether the video call application is the target application.

It is assumed that the video call application is the target application.

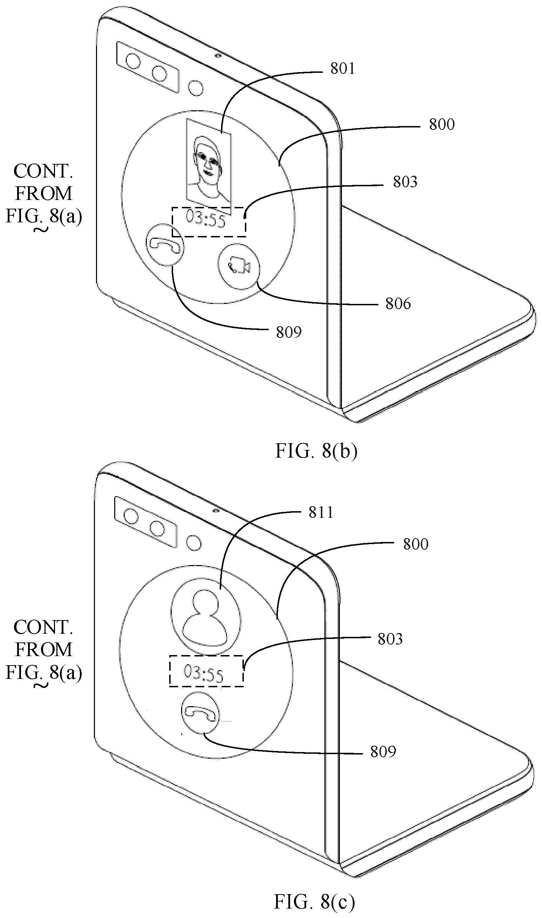

As shown in FIG. 8(b), the electronic device may obtain a call card 800 corresponding to the video call application, may determine, based on the video call interface shown in FIG. 8(a), content displayed on the call card 800, and may display the call card 800 on the secondary display. The call card 800 may include the image 801 of a call object, the call duration 803, the voice switch button 806, and the hang-up button 809 that are on the video call interface. In addition, the electronic device may disable the front-facing camera, and may enable the rear-facing camera. The user may make a video call by using the rear-facing camera, to form, based on half-folding stability, a function similar to that of a support, so that the electronic device can be stably placed at a position like a desktop, thereby releasing both hands of the user and helping the user make a video call.

Alternatively, as shown in FIG. 8(c), the electronic device may display the call card 800 on the secondary display. In this case, the call card 800 may include the call duration 803 and the hang-up button 809 that are on the video call interface, and may include an image 811 customized by the user, and the like.

It should be noted that when the first preset operation is a preset folding operation, after switching, based on the preset folding operation, the first interface displayed on the primary display to the secondary display by using the card, the electronic device may lock a current display status of the electronic device within a preset angle interval corresponding to the folding operation.

In other words, after the first interface displayed on the primary display is switched, based on the preset folding operation, to the secondary display for displaying by using the card, the user may freely adjust, within the preset angle interval corresponding to the preset folding operation, the included angle between the first display area and the second display area of the primary display. In this case, the electronic device does not switch a display status of the secondary display based on an adjustment operation of the user. That is, the electronic device may still display, on the secondary display, the card corresponding to the first application, and the content displayed on the card does not change with the adjustment operation. Therefore, for the target applications such as the video call application and the camera application that need to use a camera, the user may freely adjust an angle of the camera within the preset angle interval, to provide a better photographing angle or a better video angle, thereby improving user experience.

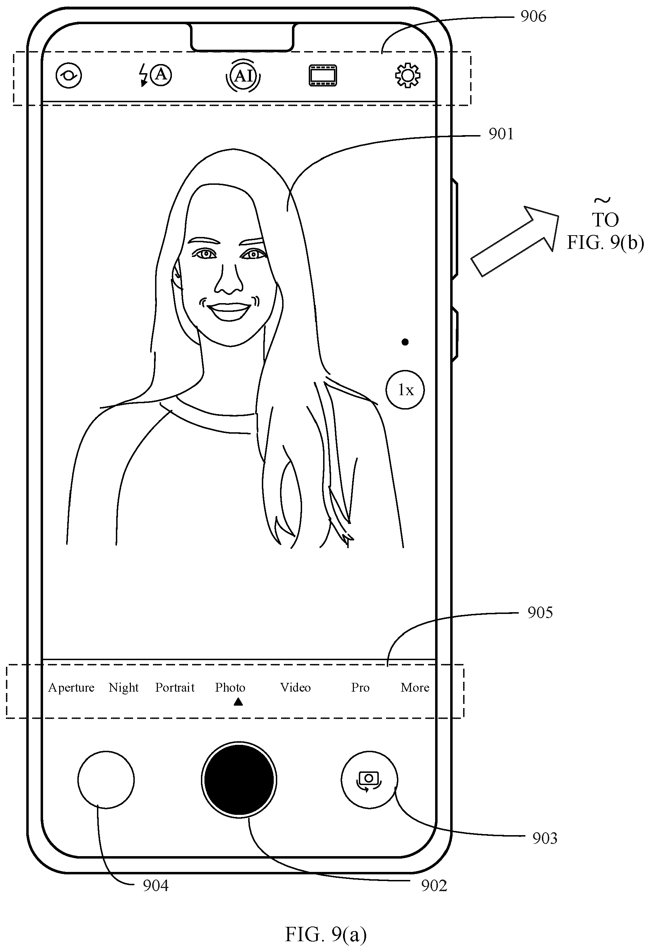

FIG. 9(a) to FIG. 9(c) are a schematic diagram 5 of an application scenario according to an embodiment of this application. The application scenario may be a selfie scenario, and a first preset operation corresponding to a camera application may be an operation of folding the primary display to enable an included angle between the first display area and the second display area of the primary display to be within [30°, 150°].

As shown in FIG. 9(a), initially, the electronic device may be in an unfolded state, and the user may enable the camera application to take a selfie. That is, the user may enable a front-facing camera located on a side the same as that of the primary display to take a selfie. In this case, a preview interface for taking a selfie by the user may be displayed on the primary display. In this case, the preview interface may include a preview image 901 taken by the user, a photographing button 902, a camera switch button 903, an image viewing button 904, a photographing mode 905 (for example, Aperture, Night, Portrait, Photo, Video, Pro, and More), and a parameter adjustment button 906 (for example, a scan button, a flash button, an AI mode button, a filter selection button, and a setting button).

When the user intends to perform selfie preview on the second display, the user may fold the primary display, so that the included angle between the first display area and the second display area of the primary display is within [30°, 150°], for example, 90 degrees, to form, based on half-folding stability, a function similar to that of a support, so that the electronic device can be stably placed at a position like a desktop, thereby releasing both hands of the user and helping the user take a selfie. When detecting the folding operation, the electronic device may determine whether the camera application is the target application.

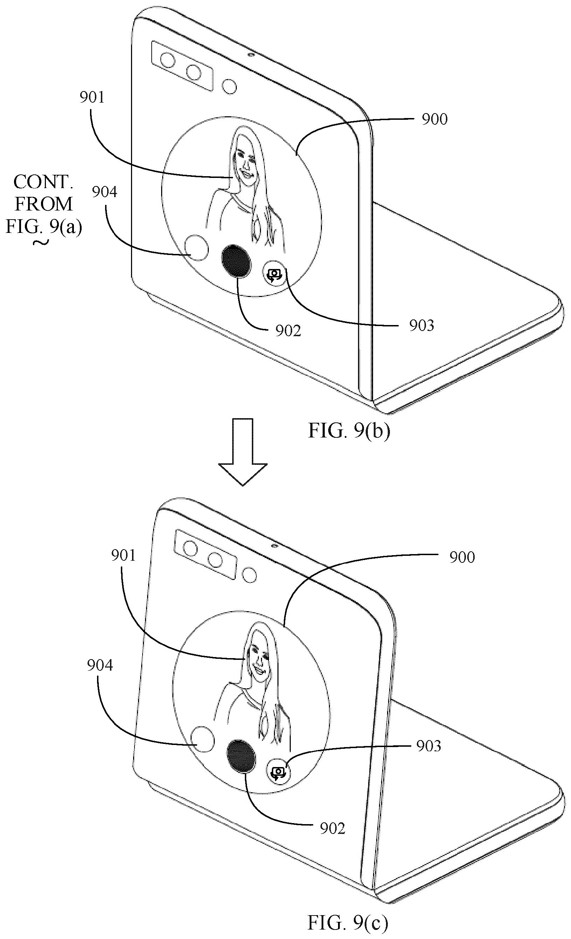

It is assumed that the camera application is the target application. As shown in FIG. 9(b), the electronic device may obtain a camera card 900 corresponding to the camera application, and may display the camera card 900 on the secondary display. In addition, the electronic device may disable the front-facing camera, and enable the rear-facing camera. In this case, the preview interface for taking a selfie by the user may be displayed on the camera card 900. In this case, the preview interface may include the preview image 901 taken by the user, the photographing button 902, the camera switch button 903, and the image viewing button 904.

As shown in FIG. 9(c), when the user continues to fold the primary display to enable the included angle between the first display area and the second display area of the primary display to be 70 degrees, the electronic device may still display the camera card 900 on the secondary display, and the preview interface for taking a selfie by the user may still be displayed on the camera card 900. In this case, the preview interface may still include the preview image 901 taken by the user, the photographing button 902, the camera switch button 903, and the image viewing button 904.

In a possible implementation, the electronic device may determine, based on the first preset operation and the second preset operation, whether the user intends to switch the first interface displayed on the primary display to the secondary display for displaying, to accurately identify a switching intent of the user based on the first preset operation and the second preset operation, thereby reducing incorrect switching, and improving user experience.

Therefore, when the first interface of the first application is displayed on the primary display, if the user intends to switch the first interface displayed on the primary display to the secondary display for displaying, the user may separately perform the first preset operation and the second preset operation within preset duration. When the electronic device detects the first preset operation and the second preset operation, the electronic device may determine that the user intends to switch the first interface displayed on the primary display to the secondary display for displaying. In this case, the electronic device may obtain the card corresponding to the first application, and may display the card on the secondary display.

The preset duration may be specifically set by a person skilled in the art based on an actual scenario. For example, the preset duration may be set to any duration like 3s, 5s, or 10s.

It should be understood that the second preset operation may alternatively be specifically set by a person skilled in the art based on an actual scenario. This is not limited in this embodiment of this application.

In an example, a uniform second preset operation may be set for different target applications. For example, the second preset operation may be uniformly set to a touch operation. The touch operation may be an operation of touching any area in the primary display or the secondary display, or may be an operation of touching a specific area in the primary display or the secondary display. It should be understood that the specific area may be specifically determined based on an actual scenario.

Alternatively, in another example, different second preset operations may be set for different target applications. For example, for the target applications such as the recording application and the voice call application, the second preset operation may be set to a touch operation; and for the target applications such as the video call application and the camera application that need to use a camera, the second preset operation may be set to a preset rotation operation.

For example, the preset rotation operation may be an operation of rotating the electronic device to enable the secondary display to face the user. The electronic device may detect the preset rotation operation by using a gyroscope sensor, an acceleration sensor, and/or the like. In an example, the electronic device may further determine, based on the rear-facing camera that is located on a side the same as that of the secondary display, whether the preset rotation operation is detected. For example, the electronic device may obtain an image shot by the rear-facing camera, to determine, based on whether a face of the user exists in the image, whether the preset rotation operation is detected.

It may be understood that when the electronic device detects only the first preset operation or detects only the second preset operation, the electronic device may continue displaying the first interface on the primary display, or may display the first interface on the first display area and/or the second display area of the primary display. When the electronic device subsequently detects the second preset operation or the first preset operation, the electronic device may display, on the secondary display by using the card, content determined based on the first interface.

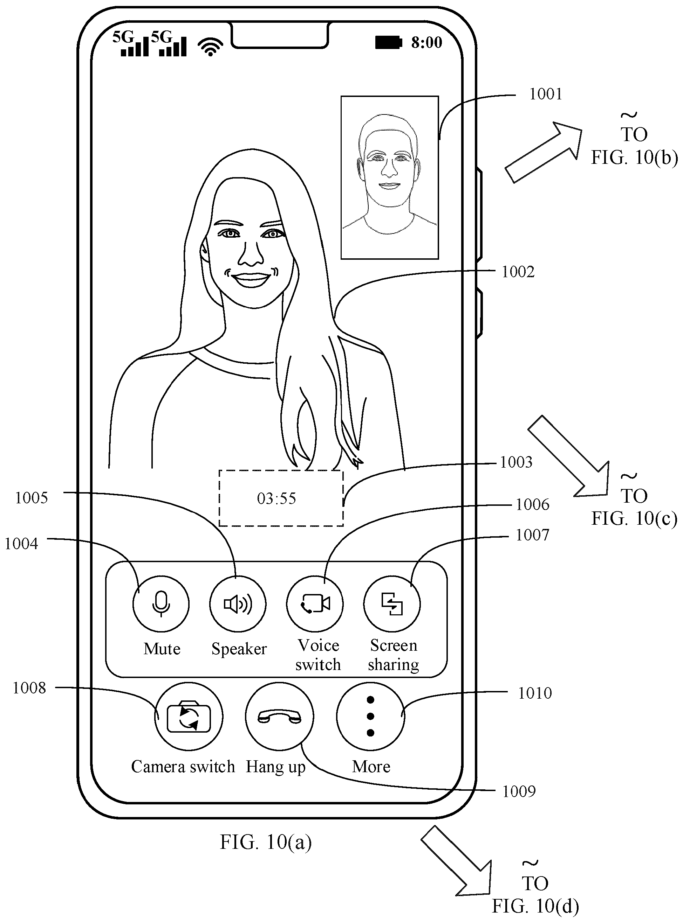

FIG. 10(a) to FIG. 10(d) are a schematic diagram 6 of an application scenario according to an embodiment of this application. The application scenario may be a video call scenario, and a first preset operation corresponding to a video call application may be an operation of folding the primary display to enable an included angle between the first display area and the second display area of the primary display to be within [30°, 150°]. A second preset operation may be a preset rotation operation, and preset duration may be 5s.

As shown in FIG. 10(a), initially, the electronic device may be in an unfolded state, and the user may enable the video call application, to make a video call with Tom. In this case, the electronic device may display a video call interface on the primary display. The video call interface may include an image 1001 of a call object, an image 1002 of the user, call duration 1003, a mute button 1004, a speaker button 1005, a voice switch button 1006, a screen sharing button 1007, a camera switch button 1008, a hang-up button 1009, a button 1010 for viewing more operations, and the like.

When the user folds the primary display to enable the included angle between the first display area and the second display area of the primary display to be 90 degrees, and rotates the electronic device, and an interval between the folding operation and the preset rotation operation is less than or equal to 5s, the electronic device may determine whether the video call application is the target application.

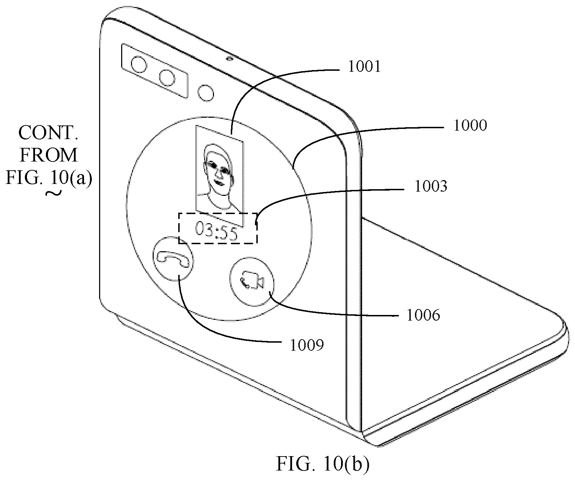

It is assumed that the video call application is the target application. As shown in FIG. 10(b), the electronic device may obtain a call card 1000 corresponding to the video call interface, may determine, based on the video call interface shown in FIG. 10(a), content displayed on the call card 1000, and may display the call card 1000 on the secondary display. The call card 1000 may include the image 1001 of a call object, the call duration 1003, the voice switch button 1006, and the hang-up button 1009 that are on the video call interface. In addition, the electronic device may disable the front-facing camera, and may enable the rear-facing camera, so that the user makes the video call by using the rear-facing camera.

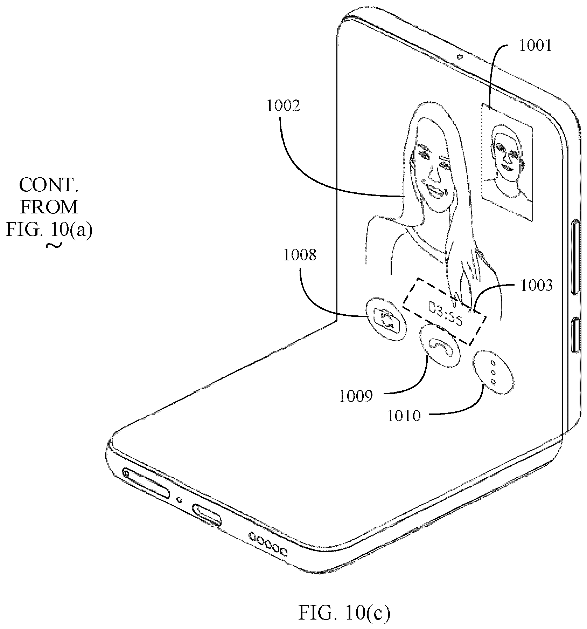

As shown in FIG. 10(c), when the electronic device detects only the folding operation, the electronic device may display the video calling interface on the first display area of the primary display. In this case, the image 1001 of a call object, the image 1002 of the user, the call duration 1003, the camera switch button 1008, the hang-up button 1009, the button 1010 for viewing more operations, and the like may be displayed on the first display area of the primary display.

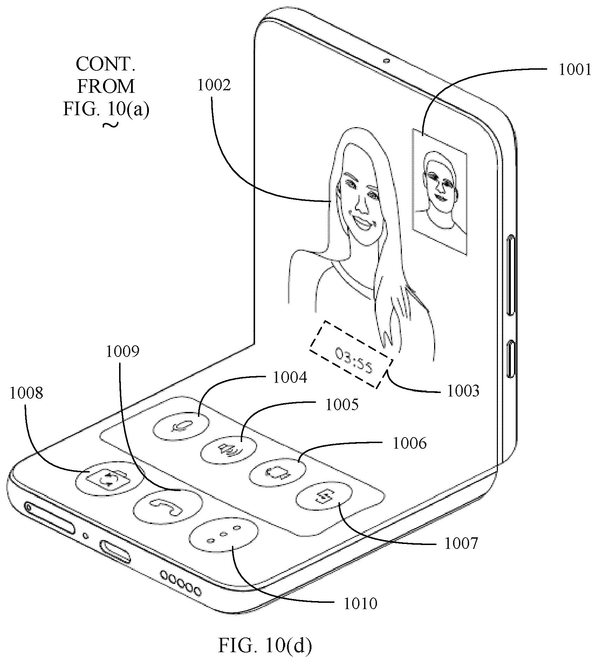

Alternatively, as shown in FIG. 10(d), the electronic device may display the image 1001 of a call object, the image 1002 of the user, and the call duration 1003 on the first display area of the primary display, and may display the mute button 1004, the speaker button 1005, the voice switch button 1006, the screen sharing button 1007, the camera switch button 1008, the hang-up button 1009, and the button 1010 for viewing more operations on the second display area of the primary display.

In a possible implementation, after the electronic device switches the first interface displayed on the primary display to the secondary display for displaying, if the user intends to switch the first interface displayed on the secondary display back to the primary display for displaying, the user may perform a third preset operation. The electronic device may switch, based on the third preset operation, the content displayed on the secondary display back to the primary display for displaying.

It should be understood that the third preset operation may be specifically set by a person skilled in the art based on an actual scenario. This is not limited in this embodiment of this application.

In an example, a person skilled in the art may set the third preset operation to a reverse operation of the first preset operation based on an actual scenario.

For example, when the first preset operation is an operation of folding the primary display to enable the included angle between the first display area and the second display area of the primary display to be within [0, 30°], the third preset operation may be an operation of unfolding the primary display to enable the included angle between the first display area and the second display area of the primary display to be within (30°, 180°].

For example, when the first preset operation is an operation of folding the primary display to enable the included angle between the first display area and the second display area of the primary display to be within [0, 60°], the third preset operation may be an operation of unfolding the primary display to enable the included angle between the first display area and the second display area of the primary display to be within (60°, 180°].

For example, when the first preset operation is an operation of folding the primary display to enable the included angle between the first display area and the second display area of the primary display to be within [30°, 150°], the third preset operation may be an operation of unfolding the primary display to enable the included angle between the first display area and the second display area of the primary display to be within (150°, 180°].

For example, when the first preset operation is an operation of flipping the electronic device to enable the secondary display of the electronic device to face the user and the primary display of the electronic device to be away from the user, the third preset operation may be an operation of flipping the electronic device to enable the primary display of the electronic device to face the user and the secondary display of the electronic device to be away from the user.

It should be noted that, that the third preset operation is a reverse operation of the first preset operation is merely an example for explanation, and should not be construed as a limitation on this embodiment of this application. In this embodiment of this application, a person skilled in the art sets the third preset operation to any operation based on an actual scenario.

In this embodiment of this application, when switching the first interface displayed on the primary display to the secondary display for displaying, the electronic device may turn off the primary display or display screen saver content on the primary display, to reduce power consumption of the electronic device. Similarly, when switching the card displayed on the secondary display to the primary display for displaying, the electronic device may turn off the secondary display or display screen saver content on the secondary display, to reduce power consumption of the electronic device.

Alternatively, after switching the first interface displayed on the primary display to the secondary display for displaying, the electronic device may turn off the primary display or display screen saver content on the primary display. Alternatively, the electronic device may first turn off the primary display or display screen saver content on the primary display, and then switch the first interface displayed on the primary display to the secondary display for displaying. In other words, an execution sequence of interface switching and turning off the primary display (or displaying screen saver content on the primary display) is not limited in this embodiment of this application, and may be specifically determined based on an actual scenario. A case of switching the card displayed on the secondary display to the primary display for displaying is similar to this.

In a possible implementation, when the card corresponding to the first application is displayed on the secondary display, the user may perform a preset exit operation on the secondary display to disable the card. The preset exit operation may be specifically set by a person skilled in the art based on an actual scenario, or may be customized by the user. This is not limited in embodiments of this application. For example, a person skilled in the art may set, based on an actual scenario, the preset exit operation to any operation like a two-finger upward sliding operation, a two-finger downward sliding operation, a three-finger leftward sliding operation, or a three-finger rightward sliding operation.

It should be understood that, after switching the first interface displayed on the primary display to the secondary display, the electronic device may run the first application on the primary display in the background.

In an example, when closing, based on the preset exit operation, the card displayed on the secondary display, the electronic device may alternatively disable the first application on the primary display, to quickly disable the first application on the primary display and the card on the secondary display through a same operation, thereby improving exit efficiency and improving user experience.

2. The first display is a secondary display of the electronic device, and the second display is a primary display of the electronic device

Initially, the secondary display of the electronic device may face the user (for example, the electronic device may be in a folded state, or the electronic device may be in an unfolded state, the secondary display faces the user, and the primary display is away from the user). The electronic device may display content on the secondary display, that is, may display the card corresponding to the first application on the secondary display. When the user intends to switch the card displayed on the secondary display to the primary display for displaying, the user may perform a first preset operation. When detecting the first preset operation, the electronic device may determine the first interface of the first application based on content currently displayed on the card, and may display the first interface on the primary display.

It should be understood that the first preset operation may be specifically set by a person skilled in the art based on an actual scenario. This is not limited in this embodiment of this application.

For example, when the electronic device is in the folded state, the first preset operation may be a preset unfolding operation. The preset unfolding operation is an operation of unfolding the primary display to enable an included angle between a first display area and a second display area of the primary display to be within a preset angle interval. For example, when the electronic device is in the unfolded state, the first preset operation may be a preset flipping operation. The preset flipping operation may be an operation of exchanging an orientation of the secondary display and an orientation of the primary display to enable the primary display to be in a visible state and the secondary display to be in an invisible state, or the preset flipping operation may be an operation of exchanging an orientation of the secondary display and an orientation of the primary display to enable the primary display to face the user.

For example, the first preset operation may be an operation of unfolding the primary display to enable the included angle between the first display area and the second display area of the primary display to be within (30°, 180°].

For example, the first preset operation may be an operation of unfolding the primary display to enable the included angle between the first display area and the second display area of the primary display to be within (60°, 180°].

For example, the first preset operation may be an operation of unfolding the primary display to enable the included angle between the first display area and the second display area of the primary display to be within (150°, 180°].

For example, the first preset operation may be an operation of flipping the electronic device to enable the primary display of the electronic device to face the user and the secondary display of the electronic device to be away from the user.

In an example, a uniform first preset operation may be set for different first applications. For example, the first preset operation may be uniformly set to an operation of unfolding the primary display to enable the included angle between the first display area and the second display area of the primary display to be within a second preset angle interval (30°, 180°]. For example, the first preset operation may be uniformly set to a preset flipping operation.

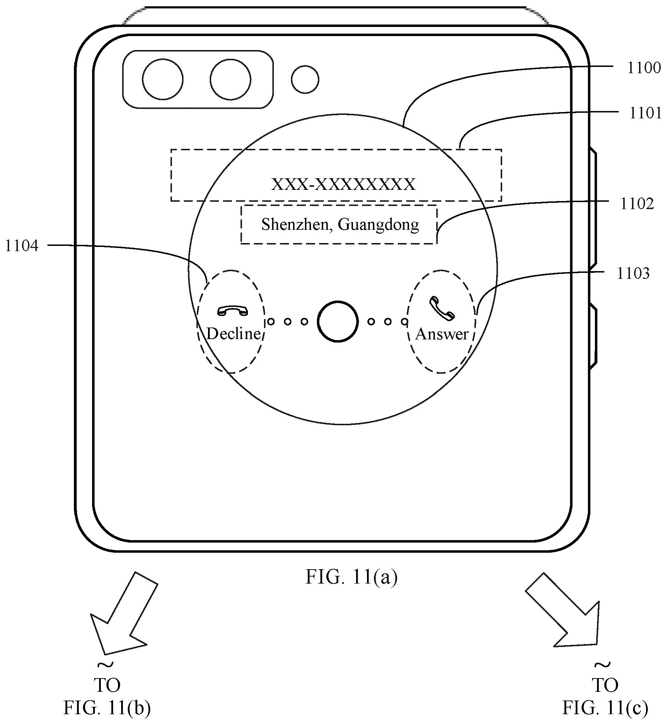

FIG. 11(a) to FIG. 11(c) are a schematic diagram 7 of an application scenario according to an embodiment of this application. The application scenario may be a voice call scenario, and a first preset operation may be an operation of unfolding the primary display to enable an included angle between the first display area and the second display area of the primary display to be within (30°, 180°].

As shown in FIG. 11(a), initially, the electronic device may be in a folded state, and when the electronic device receives incoming call information, the electronic device may display an incoming call card 1100 on the secondary display. The incoming call card 1100 may include an incoming call number 1101, an area 1102 to which the number belongs, an answer button 1103, a decline button 1104, and the like.

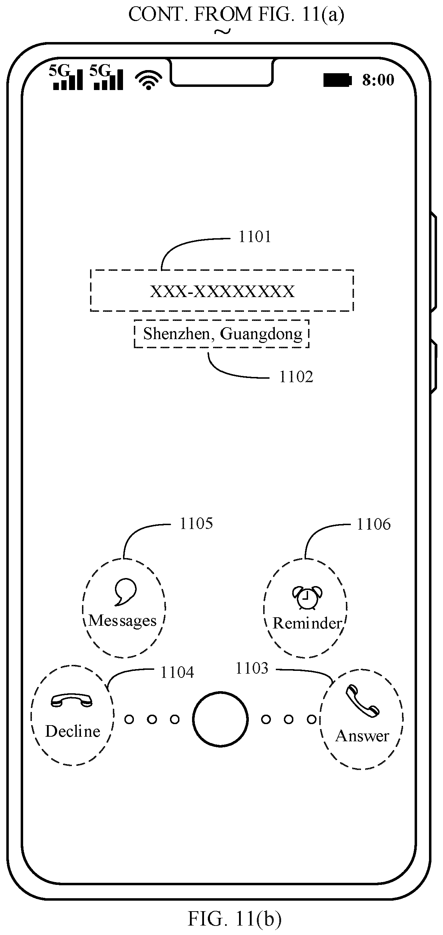

As shown in FIG. 11(b), when the user unfolds the primary display to enable the included angle between the first display area and the second display area of the primary display to be 180 degrees, the electronic device may enable a call application corresponding to the incoming call card 1100, to obtain a corresponding incoming call interface based on content displayed on the incoming call card 1100, and the electronic device may display the incoming call interface on the primary display. The incoming call interface may include the incoming call number 1101, the area 1102 to which the number belongs, the answer button 1103, the decline button 1104, an SMS message reply button 1105, a reminder button 1106, and the like.

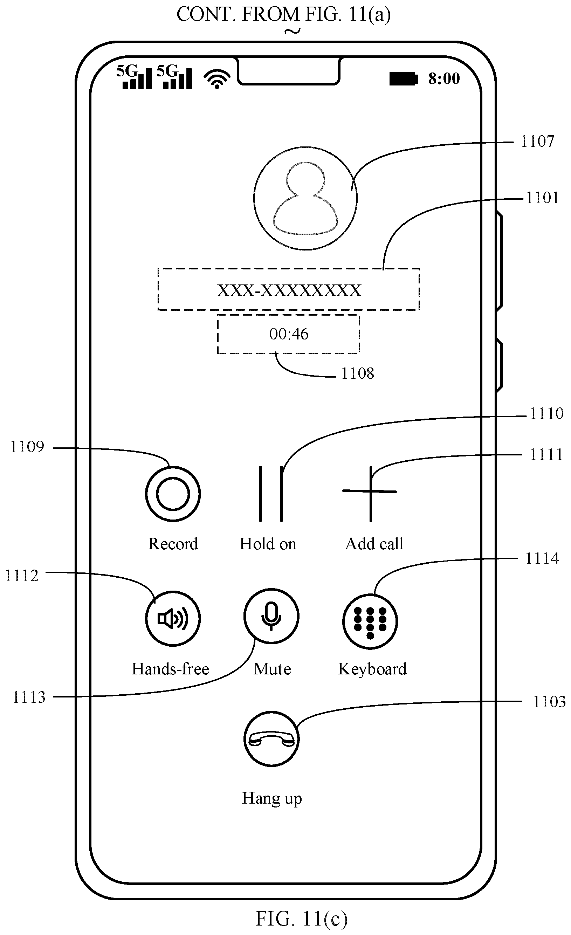

Alternatively, as shown in FIG. 11(c), when the user unfolds the primary display to enable the included angle between the first display area and the second display area of the primary display to be 180 degrees, the electronic device may enable a call application corresponding to the incoming call card 1100, and may automatically answer an incoming call. In this case, a voice call interface presented after the call is answered may be displayed on the primary display. The voice call interface may include an incoming call number 1101, a hang-up button 1103, an image 1107 corresponding to the incoming call number 1101, call duration 1108, a recording button 1109, a hold-on button 1110, an add call button 1111, a hands-free button 1112, a mute button 1113, a keyboard button 1114, and the like.

In other words, when the incoming call card is displayed on the secondary display, if the user intends to answer the incoming call, the user may perform the first preset operation (for example, the preset unfolding operation). After detecting the preset unfolding operation, the electronic device may enable the call application, and may automatically answer the incoming call. In this case, the electronic device may display, on the primary display, the call interface corresponding to the call application, so that the user directly reaches a final interface without performing excessive operations, thereby improving user experience.

In another example, different first preset operations may be set for different first applications. For example, for a recording application, a voice call application, and the like, the first preset operation may be set to an operation of unfolding the primary display to enable the included angle between the first display area and the second display area of the primary display to be within (30°, 180°]. For a music application, a radio application, and the like, the first preset operation may be set to an operation of unfolding the primary display to enable the included angle between the first display area and the second display area of the primary display to be within (60°, 180°]. For first applications such as a video call application and a camera application that need to use a camera, the first preset operation may be set to an operation of unfolding the primary display to enable the included angle between the first display area and the second display area of the primary display to be within (150°, 180°], or the like.

Therefore, for the recording application, the voice call application, and the like, the electronic device can switch the card displayed on the secondary display to the primary display for displaying only when detecting the operation of unfolding the primary display to enable the included angle between the first display area and the second display area of the primary display to be within (30°, 180°]. For the music application, the radio application, and the like, the electronic device can switch the card displayed on the secondary display to the primary display for displaying only when detecting the operation of unfolding the primary display to enable the included angle between the first display area and the second display area of the primary display to be within (60°, 180°]. For the first applications such as the video call application and the camera application that need to use a camera, the electronic device can switch the card displayed on the secondary display to the primary display for displaying only when detecting the operation of unfolding the primary display to enable the included angle between the first display area and the second display area of the primary display to be within (150°, 180°].

Optionally, for the target applications such as the video call application and the camera application that need to use a camera, when the card is displayed on the secondary display, if a camera is being used for the card, and a camera needs to be used for the first interface, when switching the content displayed on the card on the secondary display to the primary display, the electronic device may further perform camera switching. That is, the electronic device may disable a first camera that is being used for the card, and may enable a second camera that is to be used for the first interface, to help the user continue making a video call, photographing, or the like. Alternatively, the electronic device may perform camera switching after switching the content displayed on the card on the secondary display to the primary display, to help the user continue making a video call, photographing, or the like. In other words, a sequence of interface switching and camera switching is not limited in this embodiment of this application. Interface switching and camera switching may be simultaneously performed, or interface switching may be performed first, and then, camera switching is performed.

It should be understood that the second camera that is to be used for the first interface may be determined based on the first camera that is being used for the card on the secondary display. For example, when the card is displayed on the secondary display, if a rear-facing camera that is located on a side the same as that of the secondary display is used for the card, it may be determined that the second camera that is to be used for the first interface is a front-facing camera that is located on a side the same as that of the primary display. Therefore, when switching the content displayed on the card on the secondary display to the primary display, the electronic device may disable the rear-facing camera, and may enable the front-facing camera that is located on the side the same as that of the primary display, to help the user continue making a video call, photographing, or the like. For example, when the card is displayed on the secondary display, if a front-facing camera that is located on a side different from that of the secondary display is used for the card, it may be determined that the second camera that is to be used for the first interface is a rear-facing camera that is located on a side different from that of the primary display. Therefore, when switching the content displayed on the card on the secondary display to the primary display, the electronic device may disable the front-facing camera, and may enable the rear-facing camera that is located on a side the same as that of the secondary display.

In a possible implementation, when detecting the first preset operation, the electronic device may determine whether the card is a card corresponding to the target application. When the card is the card corresponding to the target application, the electronic device may switch, based on the first preset operation, the card displayed on the secondary display to the primary display for displaying. When the card is not the card corresponding to the target application, the electronic device may not respond to the first preset operation. In other words, the electronic device may continue displaying the card on the secondary display.

It should be understood that the target application may be specifically set by a person skilled in the art based on an actual scenario. This is not limited in this embodiment of this application. The target application herein may be the same as or different from the target application described in "1. The first display is a primary display of the electronic device, and the second display is a secondary display of the electronic device".

In an example, the electronic device may determine, based on the first preset operation and the second preset operation, whether the user intends to switch the content displayed on the card on the secondary display to the primary display for displaying, to accurately identify a switching intent of the user based on the first preset operation and the second preset operation, thereby reducing incorrect switching, and improving user experience.

Therefore, when the card corresponding to the first application is displayed on the secondary display, if the user intends to switch the content displayed on the card on the secondary display to the primary display for displaying, the user may separately perform the first preset operation and the second preset operation within preset duration. When the electronic device detects the first preset operation and the second preset operation, the electronic device may determine that the user intends to switch the content displayed on the card on the secondary display to the primary display for displaying. In this case, the electronic device may obtain the first interface of the first application based on the content displayed on the card, and may display the first interface on the primary display.

The preset duration may be specifically set by a person skilled in the art based on an actual scenario. For example, the preset duration may be set to any duration like 3s, 5s, or 10s.

It should be understood that the second preset operation may alternatively be specifically set by a person skilled in the art based on an actual scenario. This is not limited in this embodiment of this application.

For example, a uniform second preset operation may be set for different first applications. For example, the second preset operation may be uniformly set to a touch operation. The touch operation may be an operation of touching any area in the primary display or the secondary display, or may be an operation of touching a specific area in the primary display or the secondary display. The specific area may be specifically determined based on an actual scenario.

For example, different second preset operations may be set for different first applications. For example, for the recording application, the voice call application, and the like, the second preset operation may be set to a touch operation; and for the applications such as the video call application and the camera application that need to use a camera, the second preset operation may be set to a preset rotation operation.

For example, the preset rotation operation may be an operation of rotating the electronic device to enable the primary display to face the user. The electronic device may detect the rotation operation by using a gyroscope sensor, an acceleration sensor, and/or the like. In an example, the electronic device may further determine, based on the front-facing camera that is located on a side the same as that of the primary display, whether the preset rotation operation is detected. For example, the electronic device may obtain an image shot by the front-facing camera, to determine, based on whether a face of the user exists in the image, whether the preset rotation operation is detected.

It may be understood that when the electronic device detects only the first preset operation or detects only the second preset operation, the electronic device may continue displaying the card on the secondary display.

In an example, when a card is displayed on the secondary display, if the user intends to use a function in the card, the user may tap or touch an area or a button corresponding to the function in the card. In this case, the electronic device may output prompt information on the secondary display, where the prompt information is used to prompt the user that the electronic device may be unfolded, so that the function can be displayed on the primary display of the electronic device, thereby helping the user use the function. In addition, the electronic device may enable an application corresponding to the card, and obtain an interface corresponding to the function. After the user unfolds the primary display based on the prompt information, the electronic device may display, on the primary display, the interface corresponding to the function, so that a corresponding target interface can be quickly displayed on the primary display based on a tap or touch event on the secondary display, thereby improving user experience.

When the user does not unfold the primary display based on the prompt information, the electronic device may directly display, on the secondary display by using the card, the interface corresponding to the function.

Similar to the foregoing descriptions, after the electronic device switches the content displayed on the card on the secondary display to the primary display for displaying, if the user intends to switch the first interface displayed on the primary display back to the secondary display for displaying, the user may perform a third preset operation. The electronic device may switch, based on the third preset operation, the first interface displayed on the primary display back to the secondary display for displaying.

It should be understood that the third preset operation may be specifically set by a person skilled in the art based on an actual scenario. This is not limited in this embodiment of this application. For example, a person skilled in the art may set the third preset operation to a reverse operation of the first preset operation based on an actual scenario.

For example, when the first preset operation is an operation of unfolding the primary display to enable the included angle between the first display area and the second display area of the primary display to be within (30°, 180°], the third preset operation may be an operation of folding the primary display to enable the included angle between the first display area and the second display area of the primary display to be within [0°, 30°].

For example, when the first preset operation is an operation of unfolding the primary display to enable the included angle between the first display area and the second display area of the primary display to be within (60°, 180°], the third preset operation may be an operation of folding the primary display to enable the included angle between the first display area and the second display area of the primary display to be within [0°, 60°].

For example, when the first preset operation is an operation of unfolding the primary display to enable the included angle between the first display area and the second display area of the primary display to be within (150°, 180°], the third preset operation may be an operation of folding the primary display to enable the included angle between the first display area and the second display area of the primary display to be within [0°, 150°].

For example, when the first preset operation is an operation of flipping the electronic device to enable the primary display of the electronic device to face the user and the secondary display of the electronic device to be away from the user, the third preset operation may be an operation of flipping the electronic device to enable the secondary display of the electronic device to face the user and the primary display of the electronic device to be away from the user.

It should be noted that, that the third preset operation is a reverse operation of the first preset operation is merely an example for explanation, and should not be construed as a limitation on this embodiment of this application. In this embodiment of this application, a person skilled in the art sets the third preset operation to any operation based on an actual scenario.

It should be understood that sequence numbers of the steps do not mean execution sequences in the foregoing embodiments. The execution sequences of the processes should be determined based on functions and internal logic of the processes, and should not constitute any limitation on the implementation processes of embodiments of this application.

Corresponding to the content display method in the foregoing embodiment, an embodiment of this application further provides a content display apparatus. Modules of the apparatus may correspond to steps for implementing the content display method.

It should be noted that content such as information exchange between the foregoing apparatuses/units and execution processes thereof is based on a same concept as the method embodiments of this application. For specific functions and technical effects of the content, refer to the method embodiments. Details are not described herein again.

A person skilled in the art may clearly understand that, for the purpose of convenient and brief description, division into the foregoing functional units and modules is merely used as an example for description. In an actual application, the foregoing functions may be allocated to different functional units and modules for implementation based on a requirement. In other words, an inner structure of the apparatus is divided into different functional units or modules, to implement all or some of the functions described above. Functional units and modules in embodiments may be integrated into one processing unit, or each of the units may exist alone physically, or two or more units may be integrated into one unit. The integrated unit may be implemented in a form of hardware, or may be implemented in a form of a software functional unit. In addition, specific names of the functional units and modules are merely for ease of distinguishing between the functional units and modules, but are not intended to limit the protection scope of this application. For a specific working process of the units or modules in the foregoing system, refer to a corresponding process in the foregoing method embodiments. Details are not described herein again.

An embodiment of this application further provides an electronic device. The electronic device includes at least one memory, at least one processor, and a computer program that is stored in the at least one memory and that may run on the at least one processor. When the processor executes the computer program, the electronic device is enabled to implement the steps in any one of the foregoing method embodiments. For example, a structure of the electronic device may be shown in FIG. 2.

An embodiment of this application further provides a computer-readable storage medium. The computer-readable storage medium stores a computer program. When the computer program is executed by a computer, the computer is enabled to implement the steps in any one of the foregoing method embodiments.

An embodiment of this application provides a computer program product. When the computer program product runs on an electronic device, the electronic device is enabled to implement the steps in any one of the foregoing method embodiments.

When an integrated unit is implemented in the form of a software functional unit and sold or used as an independent product, the integrated unit may be stored in a computer-readable storage medium. Based on such an understanding, in this application, all or some of the processes in the methods in the foregoing embodiments may be implemented by using a computer program to instruct related hardware. The computer program may be stored in a computer-readable storage medium. When the computer program is executed by a processor, the steps in the foregoing method embodiments may be implemented. The computer program includes computer program code, and the computer program code may be in a source code form, an object code form, an executable file, an intermediate form, or the like. The computer-readable storage medium may include at least any entity or apparatus that can carry computer program code to an apparatus/electronic device, a recording medium, a computer memory, a read-only memory (read-only memory, ROM), a random access memory (random access memory, RAM), an electrical carrier signal, a telecommunication signal, and a software distribution medium, for example, a USB flash drive, a removable hard disk, a magnetic disk, or an optical disk. In some jurisdictions, the computer-readable medium cannot be an electrical carrier signal or a telecommunication signal according to legislation and patent practices.

In the foregoing embodiments, descriptions for all embodiments have respective focuses. For a part that is not described in detail or recorded in an embodiment, refer to the related descriptions in another embodiment.

A person of ordinary skill in the art may be aware that units and algorithm steps in the examples described with reference to embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In embodiments provided in this application, it should be understood that the disclosed apparatus/electronic device and method may be implemented in another manner. For example, the described apparatus/electronic device embodiment is merely an example. For example, division into the modules or units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of embodiments.

The foregoing embodiments are merely used to describe the technical solutions of this application, but are not intended to limit this application. Although this application is described in detail with reference to the foregoing embodiments, a person of ordinary skill in the art should understand that the technical solutions described in the foregoing embodiments may still be modified, or some technical features thereof may be equivalently replaced.

## Claims

1. A content display method, applied to an electronic device (200), wherein the electronic device (200) comprises at least a first display and a second display, and the method comprises:
displaying, by the electronic device (200) on the first display, a first interface of a first application;
detecting, by the electronic device (200), a trigger operation, wherein the trigger operation comprises a first preset operation; and
displaying, by the electronic device (200) on the second display in response to the trigger operation, a card corresponding to the first application, wherein content displayed on the card is determined by content displayed on the first interface,
**characterized in that**
the displaying, by the electronic device (200) on the second display, a card corresponding to the first application comprises:
determining, by the electronic device (200), whether the first application is a target application, wherein the target application is a preset application; and
when the first application is the target application, displaying, by the electronic device (200) on the second display, the card corresponding to the first application; and
wherein different first preset operations are set for different target applications.

2. The method according to claim 1, wherein the first display is a primary display (101) of the electronic device (200), and the second display is a secondary display (102) of the electronic device (200).

3. The method according to claim 1 or 2, wherein the first display and the second display are disposed on different sides of the electronic device (200).

4. The method according to any one of claims 1 to 3, wherein the first preset operation is a preset folding operation or a preset flipping operation.

5. The method according to claim 4, wherein the preset folding operation is an operation of folding the electronic device (200) inwards to enable an included angle between a first display area and a second display area of the first display to be within a preset angle interval.

6. The method according to claim 4, wherein the preset flipping operation is an operation of flipping the electronic device (200) to enable the first display to be in an invisible state and the second display to be in a visible state, or the preset flipping operation is an operation of flipping the electronic device (200) to enable the second display to face a user.

7. The method according to any one of claims 1 to 6, wherein the trigger operation further comprises a second preset operation, and the displaying, by the electronic device (200) on the second display in response to the trigger operation, a card corresponding to the first application comprises:
displaying, by the electronic device (200) on the second display in response to the first preset operation and the second preset operation, the card corresponding to the first application.

8. The method according to claim 7, wherein the second preset operation is a preset rotation operation, or a preset operation performed on the second display.

9. The method according to claim 8, wherein the preset rotation operation is an operation of rotating the electronic device (200) to enable the second display to face the user.

10. The method according to any one of claims 1 to 9, wherein the first display and the second display are disposed on different sides of the electronic device (200), and when a camera of the electronic device (200) is used for the first interface, and a camera of the electronic device (200) needs to be used for the card, the method further comprises:
disabling, by the electronic device (200), a first camera of the electronic device (200) that is being used for the first interface, and enabling a second camera of the electronic device (200) that is to be used for the card.

11. The method according to any one of claims 1 to 10, wherein after the displaying, by the electronic device (200) on the second display, a card corresponding to the first application, the method further comprises:
turning off, by the electronic device (200), the first display, or displaying screen saver content on the first display.

12. An electronic device (200), comprising a memory, a processor (210), and a computer program that is stored in the memory and that can be run on the processor (210), wherein when the processor (210) executes the computer program, the electronic device (200) is enabled to implement the content display method according to any one of claims 1 to 11.

## Patentansprüche

1. Inhaltsanzeigeverfahren, angewandt auf ein elektronisches Gerät (200), wobei das elektronische Gerät (200) mindestens eine erste Anzeige und eine zweite Anzeige umfasst und wobei das Verfahren Folgendes umfasst:
Anzeigen einer ersten Schnittstelle einer ersten Anwendung durch das elektronische Gerät (200) auf der ersten Anzeige,
Erkennen einer Auslöseoperation durch das elektronische Gerät (200), wobei die Auslöseoperation eine erste voreingestellte Operation umfasst, und
Anzeigen einer Karte, die der ersten Anwendung entspricht, durch das elektronische Gerät (200) auf der zweiten Anzeige in Reaktion auf die Auslöseoperation, wobei Inhalt, der auf der Karte angezeigt wird, durch Inhalt bestimmt ist, der auf der ersten Schnittstelle angezeigt wird,
**dadurch gekennzeichnet, dass**
das Anzeigen einer Karte, die der ersten Anwendung entspricht, durch das elektronische Gerät (200) auf der zweiten Anzeige Folgendes umfasst:
Bestimmen durch das elektronische Gerät (200), ob die erste Anwendung eine Zielanwendung ist, wobei die Zielanwendung eine voreingestellte Anwendung ist, und
Anzeigen der Karte, die der ersten Anwendung entspricht, durch das elektronische Gerät (200) auf der zweiten Anzeige, wenn die erste Anwendung die Zielanwendung ist, und
wobei für verschiedene Zielanwendungen verschiedene erste voreingestellte Operationen eingestellt werden.

2. Verfahren nach Anspruch 1, wobei die erste Anzeige eine primäre Anzeige (101) des elektronischen Geräts (200) ist und die zweite Anzeige eine sekundäre Anzeige (102) des elektronischen Geräts (200) ist.

3. Verfahren nach Anspruch 1 oder 2, wobei die erste Anzeige und die zweite Anzeige auf verschiedenen Seiten des elektronischen Geräts (200) angeordnet sind.

4. Verfahren nach einem der Ansprüche 1 bis 3, wobei die erste voreingestellte Operation eine voreingestellte Klappoperation oder eine voreingestellte Kippoperation ist.

5. Verfahren nach Anspruch 4, wobei die voreingestellte Klappoperation eine Operation des Einklappens des elektronischen Geräts (200) ist, um zu ermöglichen, dass ein eingeschlossener Winkel zwischen einem ersten Anzeigebereich und einem zweiten Anzeigebereich der ersten Anzeige in einem ersten voreingestellten Winkelintervall liegt.

6. Verfahren nach Anspruch 4, wobei die voreingestellte Kippoperation eine Operation des Kippens des elektronischen Geräts (200) ist, um zu ermöglichen, dass sich die erste Anzeige in einem nicht sichtbaren Zustand befindet und sich die zweite Anzeige in einem sichtbaren Zustand befindet, oder die voreingestellte Kippoperation eine Operation des Kippens des elektronischen Geräts (200) ist, um zu ermöglichen, dass die zweite Anzeige zu einem Benutzer weist.

7. Verfahren nach einem der Ansprüche 1 bis 6, wobei die Auslöseoperation ferner eine zweite voreingestellte Operation umfasst und das Anzeigen einer Karte, die der ersten Anwendung entspricht, durch das elektronische Gerät (200) auf der zweiten Anzeige in Reaktion auf die Auslöseoperation Folgendes umfasst:
Anzeigen der Karte, die der ersten Anwendung entspricht, durch das elektronische Gerät (200) auf der zweiten Anzeige in Reaktion auf die erste voreingestellte Operation und die zweite voreingestellte Operation.

8. Verfahren nach Anspruch 7, wobei die zweite voreingestellte Operation eine voreingestellte Drehoperation oder eine voreingestellte Operation ist, die auf der zweiten Anzeige durchgeführt wird.

9. Verfahren nach Anspruch 8, wobei die voreingestellte Drehoperation eine Operation des Drehens des elektronischen Geräts (200) ist, um zu ermöglichen, dass die zweite Anzeige zum Anwender weist.

10. Verfahren nach einem der Ansprüche 1 bis 9, wobei die erste Anzeige und die zweite Anzeige auf verschiedenen Seiten des elektronischen Geräts (200) angeordnet sind, und das Verfahren, wenn eine Kamera des elektronischen Geräts (200) für die erste Schnittstelle verwendet wird und eine Kamera des elektronischen Geräts (200) für die Karte verwendet werden muss, ferner Folgendes umfasst:
Deaktivieren einer ersten Kamera des elektronischen Geräts (200), die für die erste Schnittstelle verwendet wird, und Aktivieren einer zweiten Kamera des elektronischen Geräts (200), die für die Karte verwendet werden soll, durch das elektronische Gerät (200).

11. Verfahren nach einem der Ansprüche 1 bis 10, wobei das Verfahren nach dem Anzeigen einer Karte, die der ersten Anwendung entspricht, durch das elektronische Gerät (200) auf der zweiten Anzeigen ferner Folgendes umfasst:
Abschalten der ersten Anzeige oder Anzeigen von Bildschirmschonerinhalt auf der ersten Anzeige durch das elektronische Gerät (200).

12. Elektronisches Gerät (200), einen Speicher, einen Prozessor (210) und ein Computerprogramm umfassend, das in dem Speicher gespeichert ist und das auf dem Prozessor (210) laufen kann, wobei, wenn der Prozessor (210) das Computerprogramm ausführt, das elektronische Gerät (200) in die Lage versetzt wird, das Inhaltsanzeigeverfahren nach einem der Ansprüche 1 bis 11 zu implementieren.

## Revendications

1. Procédé d'affichage de contenu, appliqué à un dispositif électronique (200), le dispositif électronique (200) comprenant au moins un premier affichage et un deuxième affichage, et le procédé comprenant :
l'affichage, par le dispositif électronique (200) sur le premier affichage, d'une première interface d'une première application ;
la détection, par le dispositif électronique (200), d'une opération de déclenchement, l'opération de déclenchement comprenant une première opération prédéfinie ; et
l'affichage, par le dispositif électronique (200) sur le deuxième affichage en réponse à l'opération de déclenchement, d'une carte correspondant à la première application, un contenu affiché sur la carte étant déterminé par un contenu affiché sur la première interface,
**caractérisé en ce que**
l'affichage, par le dispositif électronique (200) sur le deuxième affichage, d'une carte correspondant à la première application comprend :
la détermination, par le dispositif électronique (200), si la première application est ou non une application cible, l'application cible étant une application prédéfinie ; et
lorsque la première application est l'application cible, l'affichage, par le dispositif électronique (200) sur le deuxième affichage, de la carte correspondant à la première application ; et
dans lequel des premières opérations prédéfinies différentes sont définies pour des applications cibles différentes.

2. Procédé selon la revendication 1, dans lequel le premier affichage est un affichage principal (101) du dispositif électronique (200), et le deuxième affichage est un affichage secondaire (102) du dispositif électronique (200).

3. Procédé selon la revendication 1 ou 2, dans lequel le premier affichage et le deuxième affichage sont disposés sur des côtés différents du dispositif électronique (200).

4. Procédé selon l'une quelconque des revendications 1 à 3, dans lequel la première opération prédéfinie est une opération de pliage prédéfinie ou une opération de retournement prédéfinie.

5. Procédé selon la revendication 4, dans lequel l'opération de pliage prédéfinie est une opération de pliage vers l'intérieur du dispositif électronique (200) pour amener un angle inclus entre une première zone d'affichage et une deuxième zone d'affichage du premier affichage dans un intervalle d'angles prédéfini.

6. Procédé selon la revendication 4, dans lequel l'opération de retournement prédéfinie est une opération de retournement du dispositif électronique (200) pour amener le premier affichage dans un état invisible et le deuxième affichage dans un état visible, ou l'opération de retournement prédéfinie est une opération de retournement du dispositif électronique (200) pour amener le deuxième affichage face à un utilisateur.

7. Procédé selon l'une quelconque des revendications 1 à 6, dans lequel l'opération de déclenchement comprend en outre une deuxième opération prédéfinie, et l'affichage, par le dispositif électronique (200) sur le deuxième affichage en réponse à l'opération de déclenchement, d'une carte correspondant à la première application comprend :
l'affichage, par le dispositif électronique (200) sur le deuxième affichage en réponse à la première opération prédéfinie et à la deuxième opération prédéfinie, de la carte correspondant à la première application.

8. Procédé selon la revendication 7, dans lequel la deuxième opération prédéfinie est une opération de rotation prédéfinie, ou une opération prédéfinie réalisée sur le deuxième affichage.

9. Procédé selon la revendication 8, dans lequel l'opération de rotation prédéfinie est une opération de rotation du dispositif électronique (200) pour amener le deuxième affichage face à l'utilisateur.

10. Procédé selon l'une quelconque des revendications 1 à 9, dans lequel le premier affichage et le deuxième affichage sont disposés sur des côtés différents du dispositif électronique (200), et le procédé comprenant en outre, lorsqu'une caméra du dispositif électronique (200) est utilisée pour la première interface et qu'une caméra du dispositif électronique (200) doit être utilisée pour la carte :
la désactivation, par le dispositif électronique (200), d'une première caméra du dispositif électronique (200) qui est utilisée pour la première interface, et l'activation d'une deuxième caméra du dispositif électronique (200) qui doit être utilisée pour la carte.

11. Procédé selon l'une quelconque des revendications 1 à 10, le procédé comprenant en outre, après l'affichage, par le dispositif électronique (200) sur le deuxième affichage, d'une carte correspondant à la première application :
l'extinction, par le dispositif électronique (200), du premier affichage, ou l'affichage d'un contenu d'économiseur d'écran sur le premier affichage.

12. Dispositif électronique (200), comprenant une mémoire, un processeur (210), et un programme d'ordinateur qui est stocké dans la mémoire et qui peut être exécuté sur le processeur (210), le dispositif électronique (200) étant amené à mettre en œuvre le procédé d'affichage de contenu selon l'une quelconque des revendications 1 à 11 lorsque le processeur (210) exécute le programme d'ordinateur.
